# EUROPEAN PATENT APPLICATION

(11) **EP 4 645 748 A1**
(43) Date of publication of application: **05.11.2025**
(21) Application number: 23911225.3
(22) Date of filing: 12.07.2023
(51) Int. Cl.: H04L 9/08, H04L 9/32

(54) **ELECTRONIC AUTHENTICATION SYSTEM AND ELECTRONIC AUTHENTICATION METHOD**

(30) Priority: 26.12.2022 JP 2022208931
(71) Applicant: Japan Communications, Inc., Minato-ku Tokyo 105-0001 (JP); Deloitte Tohmatsu Cyber LLC, Tokyo 100-0005 (JP); Deloitte Tohmatsu Financial Advisory LLC, Tokyo 100-0005 (JP); Deloitte Tohmatsu Risk Advisory LLC, Tokyo 100-0005 (JP)
(72) Inventor: FUKUDA, Naohisa, Tokyo 105-0001 (JP); KAMIZONO, Masaki, Tokyo 100-0005 (JP); MAEDA, Yoshihiro, Tokyo 100-8363 (JP); KONO, Tsuyoshi, Tokyo 100-8360 (JP); KUMAGAI, Hiroshi, Tokyo 100-0005 (JP); TAKATA, Yuta, Tokyo 100-0005 (JP); NOMURA, Kenta, Tokyo 100-0005 (JP); HAYATA, Junichiro, Tokyo 100-0005 (JP); DEICKMAN, Greg, Tokyo 105-0001 (JP); HAYASHI, Masataka, Tokyo 105-0001 (JP)
(74) Representative: Wallin, Nicholas James
(86) International application number: PCT/JP2023/025797
(87) International publication number: WO 2024/142441

(57) **Abstract**

This electronic authentication system comprises: an ID provider which issues a digital ID to a user after confirming the identity of the user; a first authentication authority which issues a first electronic certificate to the user; and a second authentication authority which issues a second electronic certificate to the user, wherein the first authentication authority and the second authentication authority combine the same digital ID issued to the user by the ID provider into the first electronic certificate and the second electronic certificate.

## Description

### TECHNICAL FIELD

The present invention relates to a trust service.

### BACKGROUND ART

The prevalence of trust services based on guidelines and regulations such as elDAS and NIST SP800-63 has been accelerating in order to realize sound electronic transactions.

### SUMMARY OF INVENTION

### TECHNICAL PROBLEM

The overall assurance level of a service is determined by the assurance level of the trust service provider, the assurance level of identity proofing, and the assurance level of identity authentication, and it is necessary to perform identity authentication using an electronic certificate having a high assurance level in order to, for example, complete a legally compliant transaction. On the other hand, since personal information is used in strict identity authentication, there is a trade-off with privacy. In view of this, there is desire for the ability to selectively use different electronic certificates that satisfy an assurance level appropriate for a service and satisfy appropriate legal requirements. However, this is problematic in terms of convenience, such as the inability to achieve inter-service cooperation across multiple electronic certificates, and complexity in management. Furthermore, differences in laws and regulations and identity authentication methods between countries make it difficult to realize a cross-border trust service.

In view of this, an object of the present invention is to provide a trust service model that can accommodate various assurance levels.

### SOLUTION TO PROBLEM

In order to achieve the foregoing object, one aspect of the present invention provides an electronic authentication system including: an ID provider issuing a digital ID to a user after performing identity proofing on the user; a first certification authority issuing a first electronic certificate to the user; and a second certification authority issuing a second electronic certificate to the user, wherein the first certification authority and the second certification authority link the same digital ID, issued to the user by the ID provider, to the first electronic certificate and the second electronic certificate. According to this configuration, it is possible to enable certificate switching and flexible inter-service cooperation.

The present invention can be construed as an electronic authentication system, an electronic authentication method, and an electronic authentication program that use an electronic certificate linked to a digital ID, as well as a recording medium non-transitorily storing the electronic authentication program. The present invention can also be construed as a system, a method, and a program for issuing and managing a digital ID and/or an electronic certificate, as well as a recording medium storing the program. The present invention can also be construed as a storage medium storing a digital ID and an electronic certificate linked to the digital ID, and an information terminal including the storage medium. The information terminal may be any device that includes a processor and a storage medium, and examples thereof include a computer, a smartphone, a tablet terminal, a game device, an IC card, a smart watch, and smart glasses. The present invention can also be construed as a service provision system, a method, and a program for providing a trust service that can be used with a digital ID and an electronic certificate linked to the digital ID, as well as a recording medium storing the program.

### ADVANTAGEOUS EFFECTS OF INVENTION

According to the present invention, it is possible to provide a trust service model that can accommodate various assurance levels.

### BRIEF DESCRIPTION OF DRAWINGS

[FIG. 1] FIG. 1 is a diagram showing components of a trust service and assurance levels of such components.
[FIG. 2] FIG. 2 is a diagram showing a configuration of a trust service model according to an embodiment of the present invention.
[FIG. 3] FIG. 3 is a diagram showing a use case of a proposed model.
[FIG. 4] FIG. 4 is a diagram showing an implementation example of the proposed model.
[FIG. 5] FIG. 5 is a diagram showing a schematic configuration of an electronic authentication system implementing the proposed model.
[FIG. 6] FIG. 6 is a diagram showing examples of three types of certification authorities and electronic certificates issued by the certification authorities.
[FIG. 7] FIG. 7 is a diagram showing an example of the configuration of an electronic authentication system.
[FIG. 8] FIG. 8 is a diagram showing an example of the configuration of an electronic authentication system.
[FIG. 9] FIG. 9 is a diagram showing an example of the configuration of an electronic authentication system.
[FIG. 10] FIG. 10 is a diagram showing an example of the configuration of an electronic authentication system.
[FIG. 11] FIG. 11 is a diagram showing an example of electronic certificate issuing processing.
[FIG. 12] FIG. 12 is a diagram showing an example of electronic certificate reissuing processing.
[FIG. 13] FIG. 13 is a diagram showing an example of electronic certificate update processing.
[FIG. 14A] FIG. 14A is a diagram showing an example of electronic certificate issuing processing.
[FIG. 14B] FIG. 14B is a diagram showing an example of electronic certificate issuing processing.
[FIG. 15] FIG. 15 is a diagram showing an example of electronic certificate reissuing processing.
[FIG. 16] FIG. 16 is a diagram showing an example of electronic certificate reissuing processing.
[FIG. 17] FIG. 17 is a diagram showing an example of electronic certificate issuing processing.
[FIG. 18A] FIG. 18A is a diagram illustrating an example of processing for post-linking a digital ID to an existing electronic certificate.
[FIG. 18B] FIG. 18B is a diagram illustrating an example of processing for post-linking a digital ID to an existing electronic certificate.
[FIG. 19] FIG. 19 is a diagram showing an example of user registration processing for registering a user with a service that requires identity proofing.
[FIG. 20] FIG. 20 is a diagram showing an example of a user registration screen for registering a user with a service that requires identity proofing.
[FIG. 21] FIG. 21 is a diagram showing an example of user registration processing for registering a user with a service that can be used anonymously.
[FIG. 22] FIG. 22 is a diagram showing an example of a user registration screen for registering a user with a service that can be used anonymously.
[FIG. 23] FIG. 23 is a diagram showing an example of login processing.
[FIG. 24] FIG. 24 is a diagram showing an example of processing for post-linking a digital ID to an existing login ID.
[FIG. 25] FIG. 25 is a diagram showing an example of inter-service cooperation performed via a data linking platform.
[FIG. 26] FIG. 26 is a diagram showing an example of direct inter-service cooperation.

### DESCRIPTION OF EMBODIMENTS

Demand for the ability to perform electronic procedures and receive electronic services has been increasing with the prevalence of the Internet and the increase in non-face-to-face procedures during the recent coronavirus pandemic. In order to implement such electronic procedures in a sound manner, regulations and guidelines have been established, such as elDAS regulations (No 910/2014) in the EU, NIST SP800-63 in the United States, and Identification Management Standards in New Zealand, and trust services compliant with such regulations and guidelines have been deployed.

An individual who wishes to perform an electronic procedure or receive an electronic service with use of a trust service is often required to have a digital ID and an electronic certificate. A digital ID is used to confirm personal information and attribute information online, and an electronic certificate is used as a component for online identity authentication. Note that in this specification, the term "digital ID" refers to a digital representation of information known about a specific individual or organization. A digital ID may include not only a first and last name, but also various types of additional information such as an identifier and attribute information.

Certification authorities that issue electronic certificates differ in terms of the level of legal grounding and available services depending on their classification, and therefore an electronic certificate needs to be of a type that is appropriate for the service and purpose of use. For example, an electronic certificate that can be used in the Japanese electronic national tax return/tax payment system (e-Tax) is required to be "an electronic certificate or the like that was created by a certification authority that is accredited as a specified certification service under the Electronic Signature Act and also undergone mutual authentication with the bridge certification authority of the Government Public Key Infrastructure (GPKI), and furthermore is compatible with e-Tax". Additionally, laws such as the Act on Prevention of Transfer of Criminal Proceeds, the Secondhand Goods Dealer Act, and the Act on Prevention of Unauthorized Use of Mobile Phones specifically designate the types of electronic certificates that can be used for identity verification. Services that are subject to strict legal regulations, such as administrative procedures, require electronic certificates that are legally grounded.

On the other hand, depending on the certification authority, personal information may be included in the issued electronic certificate, and in cases such as the above where there are limitations on the electronic certificates that can be used, it is inevitable that personal information will be made public or disclosed to the recipient. In other words, there is a trade-off between guaranteeing identity and privacy. There may be services that do not require such stored information, and it is desirable for each individual to be able to manage multiple electronic certificates and selectively use different electronic certificates that satisfy an assurance level appropriate for a service and satisfy appropriate legal requirements.

However, even if an individual holds multiple electronic certificates, it is not guaranteed that the electronic certificates belong to the same person. As a result, problems arise in terms of convenience, such as the inability to achieve cooperation between services across electronic certificates, and complexity in management.

Furthermore, given the differences in laws and regulations between countries, it is also difficult to realize trust services that can be used in multiple countries. More specifically, when exchanging orders with overseas business partners, there may be cases where, for example, the trust service in the home country does not comply with the laws and regulations that the business partner is required to comply with, or where it is necessary to comply with laws and regulations that are stricter than those in the home country. In view of this, possible countermeasures include using a single trust service that strictly complies with multiple laws and regulations, or to address each country individually. However, the former is undesirable from the viewpoint of privacy, and the latter may result in a more complicated service configuration. There is a need for a trust service model that can flexibly accommodate differences in laws and regulations from country to country without increasing the complexity of the service.

In view of this, the inventors of the present invention propose a trust service model that can accommodate various assurance levels by defining service components in a customizable manner. Specifically, by issuing, to a user, a digital ID and multiple electronic certificates that are linked to the ID and have different assurance levels, it is possible to enable certificate switching and flexible inter-service cooperation. When issuing a digital ID, in principle, "electronic Know Your Customer" (eKYC), which has a high assurance level, is performed, thus making it possible to achieve strict linking between the digital ID and the electronic certificates.

Also, if eKYC with a passport is incorporated into this model, it is possible to perform identity proofing and digital ID issuing for people who do not live in the country where the service is provided. This makes it possible to perform identity proofing for a wider range of users, thus making it possible to provide services even to people living outside of the country, such as inbound tourists. In the present invention, the identity of a user is guaranteed by incorporating a digital ID into their electronic certificate, and there are no limitations on the information in the electronic certificate or the identity verification regarding issuing. By selecting an identity verification method and a certification authority that match the characteristics of the service to be used, it is possible to comply with various domestic and international laws and regulations and adjust the assurance level. According to the present invention, advantages such as the following are achieved.
1. Expanded use of digital IDs: The proposed trust service model can link a digital ID to multiple electronic certificates. This model allows users to receive a variety of services, including highly regulated services such as administrative procedures, by simply managing a single digital ID. Furthermore, due to the characteristic of only needing to manage one ID, the cost of managing digital IDs is also low.
2. Flexible support for various assurance levels: In the proposed model, multiple electronic certificates can be selectively used, and various assurance levels can be accommodated with a single digital ID, and this is thought to be beneficial for both the service user and the trust service provider. First, the service user can select an electronic certificate for use for a particular service to be used, such as using a legally compliant electronic certificate when an administrative procedure or the like has been designated, or if no certification authority or storage information has been designated, in consideration of privacy, the service user can use an electronic certificate that does not contain personal information, for example. It is desirable for a wide range of trust service providers to participate in order to enable service users to utilize various assurance levels. This proposal guarantees the identity of the user by incorporating a digital ID, thus having benefits for the provider as well, such as achieving a low cost for the provider, and the expectation of cooperation with services in different areas through service deployment.
3. Examination of service models for expatriates: The proposed model is based on the presumption of identity proofing with a high assurance level, and the proposed model can accommodate identity verification performed using not only a trust anchor unique to Japan, such as a My Number card, but also trust anchors unique to other countries. A use case employing eKYC with a passport will be described below as an example of an embodiment of the present invention.

### <Trust Framework and Current Situation>

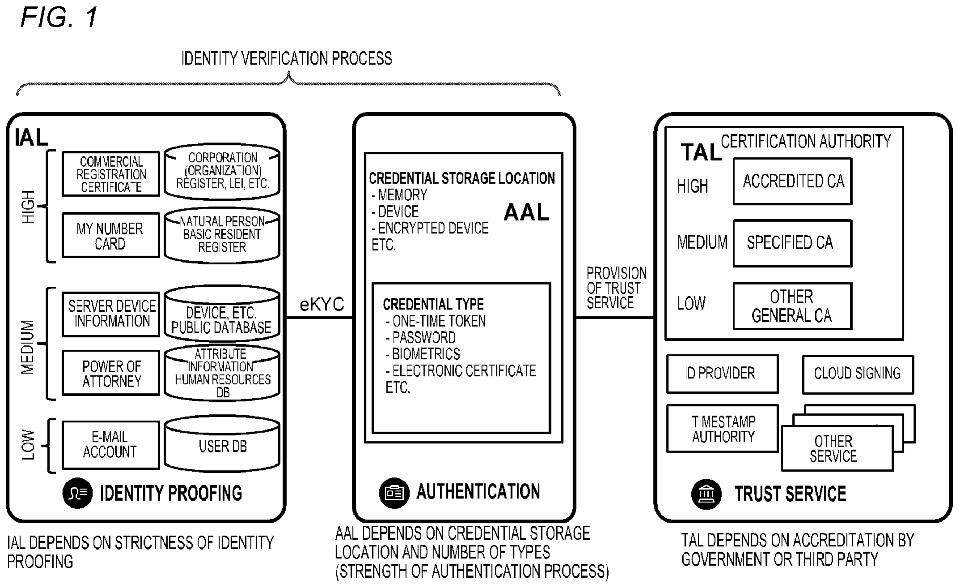

FIG. 1 shows elements that make up a trust service. The trust assurance level is defined by three levels, namely Identity Assurance Level (IAL), Authentication Assurance Level (AAL), and Trust service Assurance Level (TAL).

### (1) Identification Assurance Level (IAL)

Identity proofing refers to proving or confirming that the user's registered name, address, date of birth, and the like are correct. For example, in Japan, a My Number card or a health insurance card is used for identity proofing, and in other countries, a passport is sometimes used. Regulations and guidelines such as elDAS regulations and NIST SP800-63 classify the strictness of identity proofing into IAL levels. For example, in NIST SP800-63, as shown in Table 1, there are three assurance levels, with a declaration using an email address being Level 1, i.e., the lowest IAL 1, and a declaration verified in person by a qualified person being Level 3, i.e., the highest IAL 3. Also, the use of an official identification document is implicitly required at the higher assurance levels. Since official identification documents are generally issued by the issuing country to citizens thereof, it has become an issue to find a method for performing identity proofing with a high IAL for temporary visitors, such as inbound tourists.

**[Table 1]**

| IAL | Level definition |
|---|---|
| Level 1 | Identity proofing not needed, self-declared registration OK. Identity proofing can be performed through checking for arrival of email at email address, etc. |
| Level 2 | Attribute used for identification needs to be checked remotely or face-to-face. |
| Level 3 | Identification attribute needs to be checked face-to-face. Verification agent needs to be qualified. |

### (1.1) Identity Proofing Procedures Using eKYC in Japan

In Japan, the enforcement regulations of the Act on Prevention of Transfer of Criminal Proceeds were revised in November 2018, and the following identity proofing through eKYC was newly permitted.

Article 6, Paragraph 1, Item 1(e): transmission of image of identification document + transmission of facial image (usage of video call function over the Internet is also permitted).

Article 6, Paragraph 1, Item 1(f): transmission of IC chip information of identification document + transmission of facial image.

Article 6, Paragraph 1, Item 1(g)(1): usage for inquiries to banks, etc. A customer transmits an image of an identification document or IC chip information to a business operator, and the business operator makes an inquiry regarding the customer information to a bank, etc.

Article 6, Paragraph 1, Item 1(g)(2): usage for transfer of small amount to customer account. The customer transmits an image of an identification document or IC chip information to a business operator, and the business operator transfers a small amount to an account in the customer's name. The customer then transmits an image of the Internet banking transaction details screen.

The above eKYC implementation is a remote verification of identification attributes, and therefore the IAL level is placed at Level 2 based on the definition by NIST SP800-63.

### (1.2) Passport as Means of Identity Proofing

Passport standards are set by the International Civil Aviation Organization (ICAO), and the specifications are published in Doc 9303 Machine Readable Travel Documents.

A passport that includes an IC chip is called an IC passport, and in addition to storing data linked to the passport holder, it also has various built-in security mechanisms. Specific examples of the stored information include a passport number, date of birth, gender, expiration date, nationality, name, and facial image. A Document Signer certificate issued by the certification authority Document Signer (DS) is also stored, and this electronic certificate is used to detect tampering with data in the passport. DS is positioned as an intermediate certification authority, and there is one certification authority called the Country Signing Certification Authority (CSCA) as a root certification authority in each country that is a member of ICAO and issues IC passports. These electronic certificates are managed and operated by a repository called ICAO PKD in order to authenticate IC passports across borders, and information necessary for authentication is exchanged between countries.

IC passports currently issued in Japan incorporate three security mechanisms, namely Basic Access Control (BAC), Passive Authentication (PA), and Active Authentication (AA). The roles of these security mechanisms are as follows.

BAC: A security mechanism for preventing skimming and misuse, which performs mutual authentication between the passport and an inspection system, and performs session key sharing. After a session key is shared by BAC, various pieces of data on the IC chip can be accessed by encrypted communication between the IC chip and an inspection terminal.

PA: A security mechanism for verifying that the data in a passport's IC chip has not been tampered with. Whether or not data has been tampered with is checked by verification of the electronic signature of the data in the passport signed by the DS's private key, and verification of the hash value of the data in the passport.

AA: Passport authentication is performed by, upon receiving a challenge transmitted by an inspection system, performing signing with a private key stored in an unreadable area called a secure memory in the passport. Even if the data in the IC chip is copied, the private key in the secure memory cannot be copied, thus making it possible for passport cloning to be detected with AA.

The IAL level of identity proofing using a passport is classified as Level 3 in the case of face-to-face verification and Level 2 in the case of online verification.

### (2) Authentication Assurance Level (AAL)

Authentication refers to verifying that a person is working by verifying credentials related to biometrics, possession, or knowledge. Similarly to identity proofing, authentication is also divided into AAL levels, and in NIST SP800-63, there are three levels depending on the location and type of credential storage, as shown in Table 2.

**[Table 2]**

| AAL | Level definition |
|---|---|
| Level 1 | One-factor or two-factor authentication. |
| Level 2 | Use of two-factor authentication and NIST/FIPS-approved encryption are required. |
| Level 3 | Satisfies requirements of Level 2, and use of authenticator that is hardware-based and spoofingresistant is recommended. |

Authentication can be performed using credential elements such as fingerprints, electronic certificates, or passwords, which can be used alone or in combination. For example, authentication by password only is Level 1, i.e., the lowest AAL 1 because it only requires "knowledge", whereas authentication that combines a fingerprint with an electronic certificate stored in tamper-resistant hardware is two-factor authentication that combines "possession" and "biometrics", and thus is Level 3, i.e., the highest AAL 3. In general, credentials issued by trust service providers are used, but there is a problem in that these credentials cannot be used with other services.

### (3) Trust Service Assurance Level (TAL)

Trust service providers provide services as ID providers, cloud signing, certification authorities, and timestamp authorities, and create, verify, and validate certificates related to such services. Criteria for evaluating the reliability of such trust service providers and methods of conformity assessment need to be developed while keeping an eye on international applicability, and thus a working group convened by the Digital Agency of Japan has been conducting discussions. TAL is the result of organizing a business operator's operational policy, and TAL requirements include organizational requirements, equipment requirements, technical requirements, key management requirements, operational requirements, audit requirements, and the like. Similarly to IAL and AAL, there are three levels, and classifications based on the certifying entity are proposed as shown in Table 3.

**[Table 3]**

| TAL | Level definition |
|---|---|
| Level 1 | Certified by self. |
| Level 2 | Certified by private third-party organization. |
| Level 3 | Certified by government. |

The following are two issues with TAL. The first issue is that, similarly to the above-mentioned credential management in authentication, each trust service provider issues electronic certificates, and needs to individually manage such electronic certificates. As a result, there are problems with convenience, such as the inability to develop services that span electronic certificates and the complexity of managing electronic certificates. The second issue is that there is a trade-off between the strength of the assurance level and privacy in electronic certificates issued by trust service providers. Specifically, electronic certificates with strong legal grounding can be applied to a wide range of services, but since they contain personal information, there are cases where it is desirable to use electronic certificates that do not contain personal information, from a privacy perspective.

### (3.1) Classification of Certification Business in Japan

Certification business refers to the business of certifying that an item that was used to confirm that a user has affixed an electronic signature (in the case of an electronic signature based on public key cryptography, the item is the public key recorded in the electronic certificate) is an item pertaining to that user. Based on the Electronic Signature Law, a certification business that meets certain standards can be accredited by the Prime Minister and the Minister of Justice. Specifically, certification businesses can be classified as follows depending on their accreditation status.
- General Certification Business: certification business that uses electronic signatures not related to Electronic Signature Act
- Certification Business under Electronic Signature Act: certification business for certifying that an electronic signature is related to a user, and also satisfies requirements of Electronic Signature Act.
- Specified Certification Business: certification business that satisfies following two requirements stipulated by the Electronic Signature Act.
   (a) A certification business for certifying that an electronic signature pertains to the user.
   (b) A certification business that uses electronic signatures that satisfy technical standards (encryption methods).
- Accredited Certification Business: specified certification business that not only meets the requirements of being a specified certification business, but has also been examined and accredited by the government (Digital Agency/Ministry of Justice). More specifically, "accredited certification business" refers to a specified certification business that has been accredited upon passing an examination regarding the requirements for certification equipment, user identity verification methods, and other business operations.

Furthermore, among the above classifications, specified certification businesses and accredited certification businesses have stronger legal grounding than general certification businesses and certification businesses under the Electronic Signature Act, and accredited certification businesses in particular are the certification businesses that have the strongest legal grounding. More specifically, certificate issuing policies for accredited certification businesses are classified as Level 3 TAL, and certificate issuing policies for specified certification businesses are classified as Level 3 TAL.

### <Configuration of Proposed Trust Service Model>

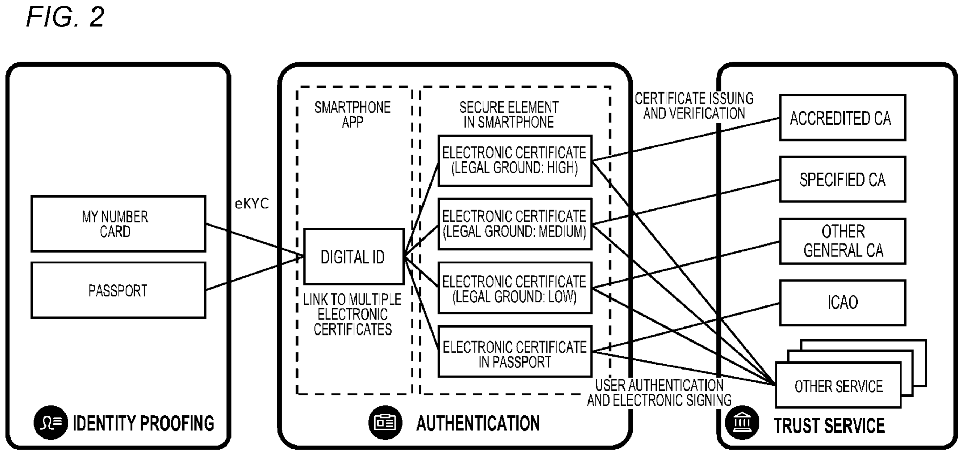

FIG. 2 shows the configuration of a trust service model according to an embodiment of the present invention. This model is designed such that the service components, including identity proofing, authentication, and trust service, can be replaced as appropriate, and this high degree of customizability makes it possible to realize support for any assurance level.

### (1) Identity Proofing

The proposed model of the present embodiment employs two types of identity proofing methods to achieve a high IAL. The first is eKYC using a My Number card, which Japan issues to its citizens. The second is eKYC using a passport, which is issued globally. The former is a method for users who live in Japan, and the latter is a method for users who are not residents of Japan, such as inbound tourists.

### (1.1) eKYC Using My Number Card

Here, in eKYC using a My Number Card, in accordance with Article 6, Paragraph 1, Item 1(m) of the Enforcement Regulations of the Act on Prevention of Transfer of Criminal Proceeds, an electronic certificate for signing and Basic 4 information (name, address, date of birth, gender) included in a My Number Card are sent along with the user's facial photo information to an accredited certification authority. The accredited certification authority then verifies the validity of the certificate through J-LIS, and manually verifies that the personal information and the facial photo information are correct. If there are no problems with the identity proofing results, an electronic certificate is issued to the user.

### (1.2) eKYC Using Passport

In eKYC using a passport, a user transmits IC chip information included in their passport to a service provider, and also transmits a facial image. The information in the IC chip is verified using the various security mechanisms mentioned above (BAC, PA, AA) and ICAO PKD. Specifically, the DS certificate stored in the passport is verified using the CSCA certification authority's public key, and then whether or not the data has been tampered with or cloned is verified using PA and AA, which are passport security mechanisms. Similarly to the procedure when using a My Number Card, the certification authority performs this series of eKYC processing on behalf of the user, and if there are no problems with the results, an electronic certificate is issued to the user.

### (2) Authentication

In authentication in the proposed model, a high AAL is realized by adopting authentication using an electronic certificate stored in the secure element of a smartphone. Also, by managing electronic certificates in association with digital IDs, authentication can be performed across multiple electronic certificates. In other words, by verifying an electronic certificate using the PKI of a certification authority or the like, and using the verification result in various other services, it is possible to realize authentication that is not dependent on a certain service provider. There is also a method of using a passport electronic certificate instead of electronic certificates issued by various certification authorities. In this case, public key verification and data tampering detection are performed similarly to the above-described eKYC using a passport described, and then a copy of the DS certificate is stored in the secure element in a smartphone. The DS certificate is used as an electronic certificate for authentication. In the case of a DS certificate for a passport, in order to ensure safety, it is desirable to take into account the security required for the service and to follow the standard specifications for passports. Note that such electronic certificates may be used in combination with user "knowledge" authentication, such as using a password or a PIN code.

### (3) Trust Service

The trust service of the proposed model of employs multiple different TAL certification authorities, such as accredited certification authorities and specified certification authorities, in order to issue the aforementioned electronic certificates. The user can select an appropriate assurance level and privacy level by using different electronic certificates issued by such certification authorities. Specifically, a service that utilizes personal information can be used by adding personal information, such as the Basic 4 information obtained through eKYC, in addition to a digital ID to an electronic certificate issued by an accredited certification authority. An electronic certificate issued by a specified certification authority is designed to ensure privacy by containing only a digital ID, and can be used for a wide range of general services. If the same organization operates these certification authorities and links a single digital ID for a user to multiple electronic certificates, it is possible to realize user identification across multiple electronic certificates as described above.

### <Example of Use Cases of Proposed Model>

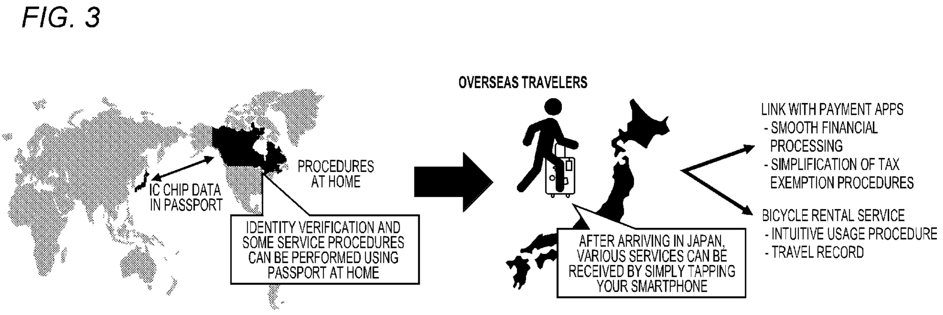

The following describes two examples of use cases of the proposed model. As shown in FIG. 3, in both use cases, there is an advantage of enabling identity proofing and the service to be partially performed online. Specifically, given that online procedures can performed with no restrictions on the location where the procedure is performed, a service user can complete part of the procedure from home. Also, if online procedures are made available in multiple languages, service users can complete the procedures in their native language, which is thought to reduce the psychological burden on users.

### (1) Use Case in Tourism Services

The proposed model is also envisioned to be used by inbound tourists, and thus is suitable for use in tourism services. For example, a digital ID issued in this model can be used for registration and usage of services such as rental bicycles. In the case of developing a rental cycle service that utilizes digital IDs on smartphones and allows the completion of procedures simply by holding a smartphone over the rental cycle, such intuitive operation allows even inbound tourists to easily perform the procedure without a language barrier. Furthermore, by linking the location information of the rental cycle to the digital ID, it is possible to record the movement history during the time period when the rental cycle was used and to measure the calories burned. Such records can be used not only as a record of the inbound tourist's trip, but also as healthcare data for people who live in the area and regularly use rental bicycles.

### (2) Use Case In Payment Services

The proposed model envisions the deployment of services with various assurance levels, and thus is also suitable for payment services that require a high assurance level. By linking a digital ID issued by the proposed model to a payment service and managing a purchase history, it is thought that complicated tax exemption procedures performed by inbound tourists can be automated. Although tax-free sales procedures have been digitized since October 2021, tourists are still required to present a physical passport, and not all procedures have been digitized. By using the proposed model, in the future it will be possible to complete tax exemption procedures with just a smartphone.

### (3) Issues in Use Case Implementation

Popularization of IC passports: According to data published by ICAO PKD, there are currently 88 countries participating in ICAO PKD and issuing IC passports. Although the number of countries participating in ICAO PKD is increasing year by year, there are still countries that have not joined or have not issued IC passports. Therefore, one of the future challenges is to consider measures to accommodate service users from countries that have not joined the ICAO PKD or countries that only issue paper passports.

Differences in passport reliability between countries: In the eKYC proposed by the inventors of the present invention, as long as a person holds a passport, there is no difference in procedures depending on their country of origin. However, just as Active Authentication is an optional item in the security mechanisms built into IC passports, the optional items that are selected for adoption differ from country to country, and thus the level of security of a passport is thought to also differ depending on the selection. Furthermore, because there are large differences in the reliability of passports between countries, another future issue is thought to be the need to take into account differences in the approach and reliability of passports between countries, and introduce additional procedures in cases where the reliability and security mechanisms fall below a certain level.

### <Implementation Example>

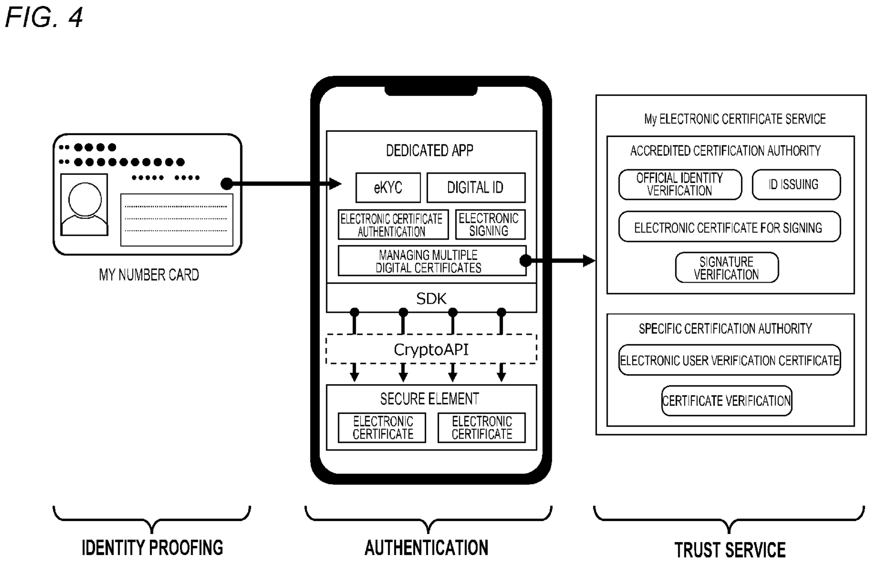

FIG. 4 shows an implementation example of the proposed model. FIG. 4 shows an example of assigning a digital ID through the implementation of the My Electronic Certificate Service, which is provided by an accredited certification authority, and eKYC using My Number card. A user can receive various trust services by using the digital ID on their smartphone.

### <Electronic Authentication System>

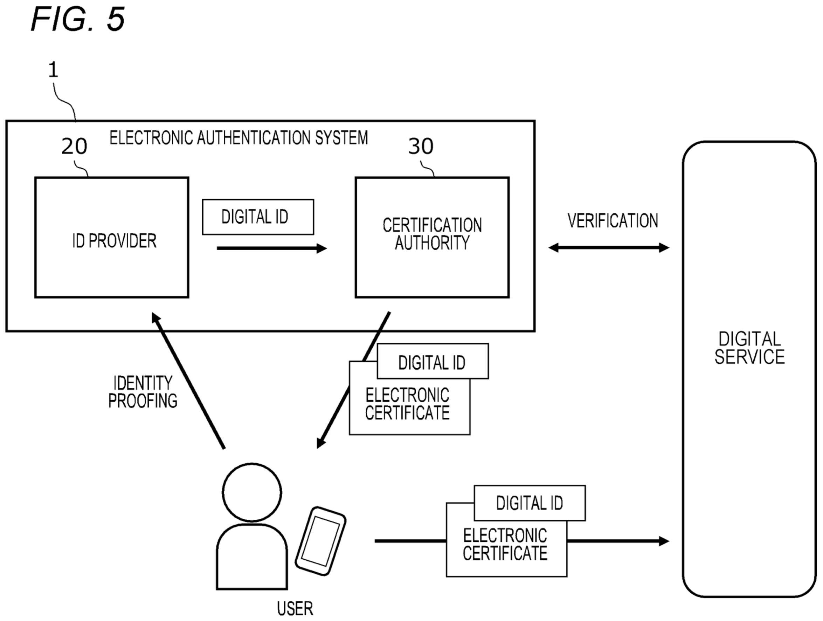

FIG. 5 shows the schematic configuration of an electronic authentication system in which the proposed model is implemented. An electronic authentication system 1 is a system that issues and verifies electronic certificates, and includes an ID provider 20 and a plurality of certification authorities 30 as main elements.

The ID provider 20 is an element responsible for verifying the identity of a user through eKYC, as well as issuing and managing digital IDs, for example. A digital ID is identification information uniquely assigned to users (including individuals and organizations). For example, a digital ID may be made up of a character string including around ten to several tens of digits (e.g., a combination of numbers, letters, and symbols). Although the format and the content of the digital ID may be designed as desired, it is preferable that the user cannot be identified by the digital ID alone. The digital ID in the proposed model need only be an indicator indicating that multiple electronic certificates have been issued to the same user, and this is because there is no requirement for a function for identifying to whom the digital ID was issued. Making it impossible to identify an individual user using the digital ID alone eliminates issues regarding privacy level consideration and personal information handling when using the digital ID on its own, thus making it possible to simplify the operation of the electronic authentication system 1.

The certification authorities 30 are elements responsible for issuing, verifying, and managing electronic certificates, for example. It is desirable that there are a plurality of certification authorities 30 that issue electronic certificates having different assurance levels (TAL). In the example shown in FIG. 5, a first certification authority 30 issues a first electronic certificate, and a second certification authority 30 issues a second electronic certificate having a lower assurance level than the first electronic certificate, but the number of certification authorities 30 is not limited to two, and three or more certification authorities 30 may be provided. When using a digital service, the user can select which of the electronic certificates issued by the electronic authentication system 1 is to be used. For example, the user may use different electronic certificates depending on the assurance level required by the digital service. FIG. 5 shows an example in which the first electronic certificate is used for a first service, and the second electronic certificate is used for a second service.

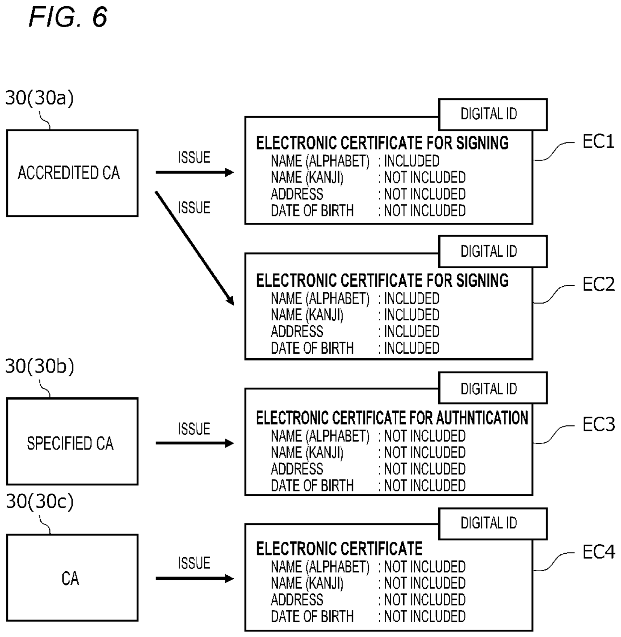

FIG. 6 shows, as an example, three types of certification authorities 30a, 30b, and 30c, and electronic certificates issued by the certification authorities 30a, 30b, and 30c. The accredited certification authority 30a is a certification authority that provides an accredited certification service accredited by the government, and issues electronic certificates for signing EC1 and EC2 having the strictest assurance level that satisfies Level 3 TAL. The electronic certificates for signing EC1 and EC2 are used for specific purposes, such as for the electronic signing of official documents. The electronic certificates for signing EC1 and EC2 contain the user's personal information (e.g., name, address, and date of birth). The specified certification authority 30b is a certification authority that provides a specified certification service that meet the requirements stipulated by the Electronic Signature Act, and issues an electronic certificate for authentication EC3 having an assurance level that satisfies Level 2 TAL 2 or Level 1 TAL. Although there are no particular restrictions on the use of the electronic certificate for authentication EC3, it is used for electronic signing, authentication, encryption, and the like that meet the requirements of the Electronic Signature Act. The general certification authority 30c is a certification authority that provides a certification service that is not legally grounded. An electronic certificate EC4 issued by the certification authority 30c has no particular restrictions on usage and does not meet the requirements of the Electronic Signature Act. The electronic certificate for authentication EC3 and the general electronic certificate EC4 do not include personal information.

A digital ID issued by the ID provider 20 is linked to each of the electronic certificates. If the four types of electronic certificates shown in FIG. 6 are issued to the same user, the same digital ID is linked to each of the electronic certificates. Therefore, by checking whether the digital IDs are the same, it is possible to determine whether the electronic certificates belong to the same user and perform management.

Here, the phrase "link a digital ID" refers to the operation of indicting and ensuring the correspondence between a digital ID and an electronic certificate. Typically, it is sufficient that the digital ID is described in the electronic certificate. Since it is impossible to falsify the electronic certificate itself, if the digital ID is described in the electronic certificate, impersonation of the digital ID can be prevented. However, if the correspondence between a digital ID and an electronic certificate can be guaranteed or verified by another means, the electronic certificate and the digital ID may be managed using separate data.

According to the above configuration, the electronic authentication system 1 issues a digital ID to the user, and also issues to the user multiple types of electronic certificates linked to the digital ID. Adopting such a framework has advantages such as those described below.

Among the various types of electronic certificates EC1 to EC4, the assurance level is lowest for the general electronic certificate EC4, higher for the electronic certificate for authentication EC3, and highest for the electronic certificates for signing EC1 and EC2, and the scope of usage increases in the same order. On the other hand, since the general electronic certificate EC4 and the electronic certificate for authentication EC3 do not include personal information, the level of anonymity is higher than that of the electronic certificates for signing EC1 and EC2. The user can use the electronic certificates EC1 to EC4 as appropriate for the intended application, such as using an electronic certificate having a high assurance level when using a service that requires legal grounding, and using an electronic certificate having a high level of anonymity for other applications. This makes it possible to realize electronic certificate operation that achieves balance between protecting privacy and ensuring a required assurance level and legal requirement satisfaction.

Furthermore, the electronic certificates EC1 to EC4 are linked to the digital ID, and the digital ID is issued after the user has undergone identity proofing. Therefore, even if an anonymous electronic certificate (EC3 or EC4) is linked to the digital ID, it is guaranteed that the electronic certificate belongs to the user. In other words, according to the electronic authentication system 1, it is possible to realize an electronic certificate that has the contradictory properties of "anonymity with authenticity." For various digital services provided on the Internet, it is often the case that the user desires to use a service as easily as possible while keeping their personal information confidential, whereas the service provider desires to eliminate unknown users and fake accounts as much as possible to ensure safe operation of the service. An electronic certificate having "anonymity with authenticity" enables operational design that satisfies the conflicting demands of users and service providers in a well-balanced manner, and thus can be said to be an electronic certificate that has very high practical value.

Furthermore, the fact that multiple electronic certificates belong to the same user is ensured using a digital ID, thus enabling inter-service cooperation across electronic certificates. For example, as shown in FIG. 5, envision a situation where the user is using a first service and a second service, and the user desires for information stored in the first service to be linked with the second service. Conventionally, there has been no way for a service provider to reliably verify and confirm that the user of the first service and the user of the second service are both the same person. Therefore, even if a user wishes for inter-service cooperation and grants permission, the exchange of user data between different service providers has been risky and difficult to realize. On the other hand, in the case of the framework of the electronic authentication system 1, the digital ID linked to the first electronic certificate used for authentication in the first service can be compared with the digital ID linked to the second electronic certificate used for authentication in the second service, thus making it possible to confirm the authenticity and identity of the user of the first service and the user of the second service. Therefore, it is expected that data can be linked between different service providers in a safe and simple manner.

### <System Configuration>

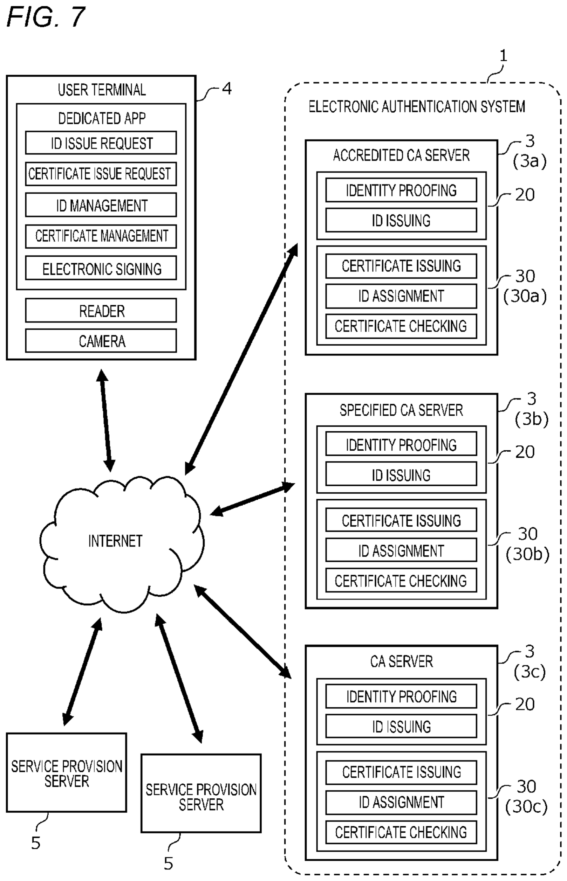

The ID provider 20 and the certification authority 30, which are the two elements of the electronic authentication system 1, may be implemented on the same server or on different servers. Furthermore, a configuration may be adopted in which a plurality of certification authorities 30a to 30c having different assurance levels are implemented in one server, or a configuration may be adopted in which the certification authorities 30a to 30c are individually installed in different servers. Examples of the system configuration will be described below with reference to FIGS. 7 to 10.

### (1) Configuration in Which All Certification Authorities Have ID Provider

An example of a system configuration in which all certification authorities have an ID provider will be described below with reference to FIG. 7. FIG. 7 shows not only the configuration of the electronic authentication system 1, but also devices of the user and the service providers who use the trust service provided by the electronic authentication system 1.

The electronic authentication system 1 is constituted by a plurality of certification authority servers 3. Specifically, the certification authorities include an accredited certification authority server 3a, a specified certification authority server 3b, and a general certification authority server 3c (hereinafter, only a reference number will be used when describing matter that is the same for all of the certification authority servers, and the letters "a" to "c" will be appended when describing the certification authority servers individually). The certification authority servers 3 are each overall constituted by two units, namely an ID provider 20 and a certification authority 30. The ID provider 20 has a function of confirming a user's identity by verifying the user's ID card (identity proofing), and a function of issuing and managing digital IDs (ID issuing). Also, the certification authority 30 has a function of issuing and managing electronic certificates (certificate issuing), a function of linking a digital ID to an electronic certificate (ID assignment), and a function of checking whether or not an electronic certificate has been revoked (certificate confirmation). The certification authority 30a of the accredited certification authority server 3a is an accredited certification authority that can execute accredited certification operations, the certification authority 30b of the specified certification authority server 3b is a specified certification authority that can execute specified certification operations, and the certification authority 30c of the certification authority server 3c is a general certification authority.

The certification authority server 3 can be constituted by a general-purpose computer that includes a processor (CPU), a memory, a storage device, a communication device, and the like, and the above-mentioned functions are realized by the processor executing programs deployed from the storage device to the memory. The certification authority servers 3 may each be constituted by a single computer, by multiple computers working together as in distributed computing, or a resource dynamically allocated as in cloud computing. Alternatively, part or all of the functions provided by the certification authority server 3 may be configured by a circuit such as an FPGA or an ASIC, or by dedicated hardware.

The user can use a trust service using a user terminal 4. The user terminal 4 has functions related to trust services, such as a function of requesting the electronic authentication system 1 (ID provider 20) to issue a digital ID (ID issue request), a function of requesting the electronic authentication system 1 (certification authority 30) to issue an electronic certificate (certificate issuing request), a function of storing and managing a digital ID assigned by the electronic authentication system 1 (ID management), a function of storing and managing an electronic certificate assigned by the electronic authentication system 1 (certificate management), a function of performing electronic signing using public key cryptography (electronic signing), a function of reading information from an IC chip provided in an official identification document such as a My Number card or an IC passport (reader), a function of taking a picture of the user or official identification document (camera), and a function of generating a key pair including a private key and a public key.

The user terminal 4 can be constituted by, for example, a general-purpose computer that includes a processor (CPU), a memory, a storage device, a communication device, an input device, a display device, a card reader, a camera, and the like. Specifically, a smartphone, a tablet terminal, a personal computer, a wearable terminal, or the like can be used as the user terminal 4. The functions related to trust services described above are realized by a dedicated application (program) installed on the user terminal 4. It is preferable that the user terminal 4 has a secure IC chip (secure element) that is tamper-resistant, and it is preferable that data related to trust services (e.g., digital IDs, electronic certificates, private keys, and public keys) is stored in the secure IC chip. It is also preferable that all or part of the functions of the dedicated application are stored in the secure IC chip and executed therein. In the case of such a configuration, a program executed by the processor of the user terminal 4 uses data and functions in the secure IC chip via a CryptoAPI (Cryptographic Application Programming Interface). Furthermore, when using the data and functions in the secure IC chip, the input of a password, a PIN code, or the like may be requested as necessary. Such a configuration can prevent the falsification, unauthorized use, and leakage of data related to trust services.

A service provision servers 5 is a server operated by a service provider, and provides digital services to users via the Internet. There are no limitations on the type of digital service. There are various examples of services, such as e-commerce, SNS, video distribution, cashless payments, online meetings, food ordering and delivery, internet banking, fintech services, data sharing services, administrative procedures, restaurant search and reservations, online medical treatment, online prescription filling, taxi dispatch, and membership applications.

The service provision server 5 uses an electronic certificate issued by the electronic authentication system 1 to authenticate a user (i.e., the person accessing the service provision server 5 from the user terminal 4) and to verify an electronic signature received from the user terminal 4. The assurance level of the electronic certificate requested from the user may be determined by the service provision server 5 in accordance with the assurance level required for the digital service to be provided. For example, in the case of services that require a high assurance level, such as administrative procedures or internet banking, it is sufficient to request the user for any of the electronic certificates EC1 to EC3 issued by the accredited certification authority 30a and the specified certification authority 30b, whereas in the case of services that do not require a high assurance level, such as e-commerce or SNS, it is sufficient to request the user for the electronic certificate EC4 issued by the general certification authority 30c.

The service provision server 5 can be constituted by, for example, a general-purpose computer that includes a processor (CPU), a memory, a storage device, a communication device, and the like, and the above-mentioned functions are realized by the processor executing programs deployed from the storage device to the memory. The service provision server 5 may be constituted by a single computer, by multiple computers working together as in distributed computing, or a resource dynamically allocated as in cloud computing. Alternatively, part or all of the functions provided by the service provision server 5 may be constituted by a circuit such as an FPGA or an ASIC, or by dedicated hardware.

In the system configuration shown in FIG. 7, all of the certification authority servers 3a to 3c can issue a digital ID. Information regarding the digital ID issued to the user is shared via the user terminal 4, through direct cooperation between the certification authority servers 3a to 3c, or through a data linking platform (not shown), in order to be shared among the certification authority servers 3a to 3c and used for electronic certificate issuing processing. The configuration shown in FIG. 7 is suitable in the case where, for example, the certification authorities 30a to 30c pertain to different operating organizations, or the case where each certification authority has a large usage scale.

### (2) Configuration in Which Certification Authority and ID Provider Are Different Entities

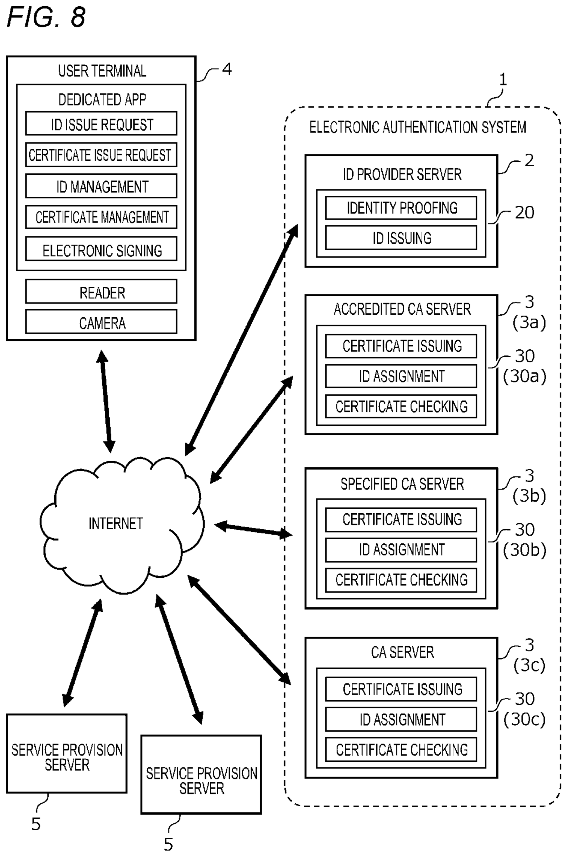

An example of a system configuration in which the certification authority and ID provider are different entities will be described below with reference to FIG. 8. The configurations of the user terminal 4 and the service provision server 5 are the same as those shown in FIG. 7, and thus only the configuration of the electronic authentication system 1 will be described below.

The electronic authentication system 1 is constituted by an ID provider server 2 and a plurality of certification authority servers 3 (accredited certification authority server 3a, specified certification authority server 3b, and general certification authority server 3c). The ID provider 20 implemented in the ID provider server 2 has a function of confirming a user's identity by verifying the user's ID card (identity proofing), and a function of issuing and managing digital IDs (ID issuing). Additionally, the certification authority 30 implemented in each of the certification authority servers 3 has a function of issuing and managing electronic certificates (certificate issuing), a function of linking digital IDs to electronic certificates (ID assignment), and a function of checking whether or not an electronic certificate has been revoked (certificate confirmation). The electronic authentication system 1 is constructed by the ID provider server 2 and the certification authority servers 3 operating in coordination with each other via the Internet.

The ID provider server 2 can be constituted by a general-purpose computer that includes a processor (CPU), a memory, a storage, a communication device, and the like, and the above-mentioned functions are realized by the processor executing programs deployed from the storage to the memory. The ID provider server 2 may be constituted by a single computer, by multiple computers working together as in distributed computing, or a resource dynamically allocated as in cloud computing. Alternatively, part or all of the functions provided by the servers 2 and 3 may be constituted by a circuit such as an FPGA or an ASIC, or by dedicated hardware.

In the system configuration shown in FIG. 8, the issuing of a digital ID and the issuing of an electronic certificate are executed by different servers. Information regarding the digital ID issued to the user is shared via the user terminal 4, through direct cooperation between the ID provider server 2 and the certification authority servers 3a to 3c, or through a data linking platform (not shown), in order to be shared among the certification authority servers 3a to 3c and used for electronic certificate issuing processing. The configuration of FIG. 8 is suitable in the case where, for example, the ID provider 20 and the certification authorities 30a to 30c pertain to different operating organizations, or the case where the ID provider and the certification authorities each have a large usage scale.

### (3) Configuration in Which Multiple Certification Authorities Are Implemented by One Server

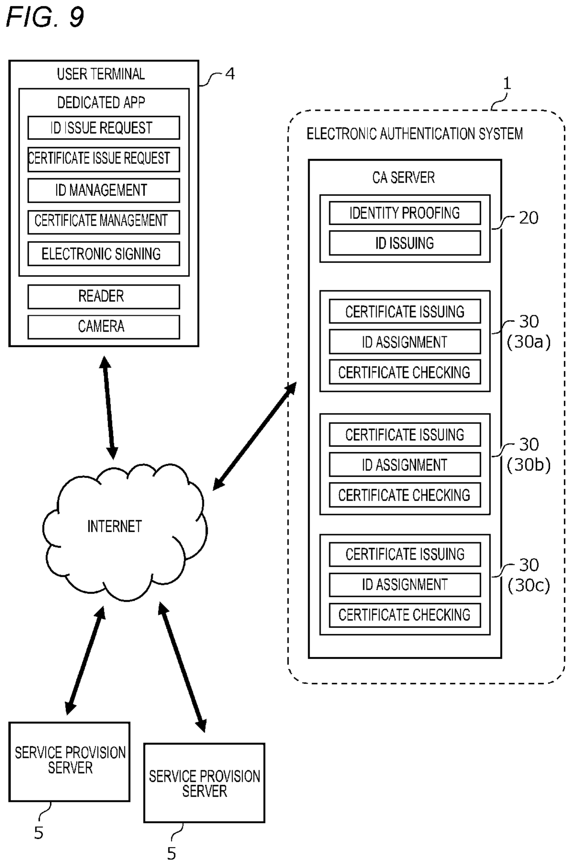

An example of a system configuration in which a plurality of certification authorities having different assurance levels are implemented in one certification authority server will be described with reference to FIG. 9. The configurations of the user terminal 4 and the service provision server 5 are the same as those shown in FIG. 7, and thus only the configuration of the electronic authentication system 1 will be described below.

The electronic authentication system 1 is constituted by one certification authority server 3. The certification authority server 3 is overall constituted by an ID provider 20, an accredited certification authority 30a, a specified certification authority 30b, and a general certification authority 30c. The ID provider 20 has a function of confirming a user's identity by verifying the user's ID card (identity proofing), and a function of issuing and managing digital IDs (ID issuing). Also, the certification authorities 30a to 30c each have a function of issuing and managing electronic certificates (certificate issuing), a function of linking digital IDs to electronic certificates (ID assignment), and a function of checking whether or not an electronic certificate has been revoked (certificate confirmation).

FIG. 9 shows the minimum system configuration required to implement the trust service of the proposed model with just one server. For example, this system configuration is suitable for use at the start of operation, when the scale of operation is small, or in a private network with limited users or scope of use (e.g., an intranet service within a company or school).

### (4) Configuration in Which Certification Authority Having Highest Assurance Level Also Serves as ID Provider

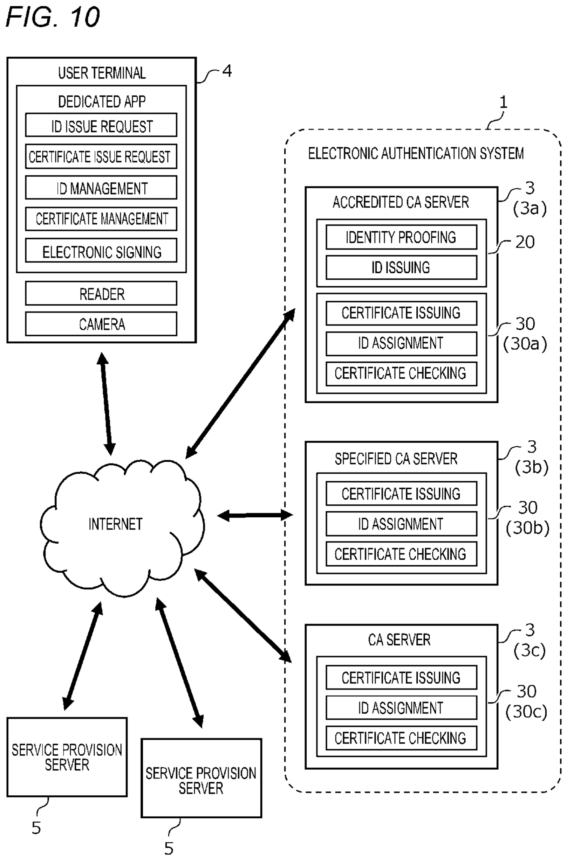

An example of a system configuration in which the certification authority having the highest assurance level also serves as the ID provider will be described below with reference to FIG. 10. The configurations of the user terminal 4 and the service provision server 5 are the same as those shown in FIG. 7, and thus only the configuration of the electronic authentication system 1 will be described below.

The electronic authentication system 1 is constituted by a plurality of certification authority servers 3 (accredited certification authority server 3a, specified certification authority server 3b, and general certification authority server 3c). Among these certification authority servers, only the accredited certification authority server 3a having the highest assurance level is provided with the ID provider 20. According to this configuration, the user's identification data (identity verification information) required for issuing a digital ID and issuing the electronic certificates for signing EC1 and EC2 can be entirely handled in simply the accredited certification authority server 3a. Information regarding the digital ID issued by the accredited certification authority server 3a is shared via the user terminal 4, through direct cooperation between the certification authority servers 3a to 3c, or through a data linking platform (not shown), in order to be shared among the certification authority servers 3a to 3c and used for electronic certificate issuing processing.

The system configurations shown in FIGS. 7 to 10 described above are merely examples, and it is sufficient to adopt a system configuration that is optimal in view of the scale of the ID provider or certification authority, operating organization, operational management, scope of use, or the like.

### <Issuing of Digital ID and Electronic Certificate>

Next, the flow of processing for issuing a digital ID and electronic certificates in the electronic authentication system 1 will be described. Since the processing and data flow and the entities that execute processing differ depending on the configuration of the electronic authentication system 1 (FIGS. 7 to 10), variations in processing will be illustrated below for each system configuration. Note that it is presumed that a dedicated application is installed on the user terminal 4.

### (1) Example in Which One Server Issues Digital ID and Electronic Certificates

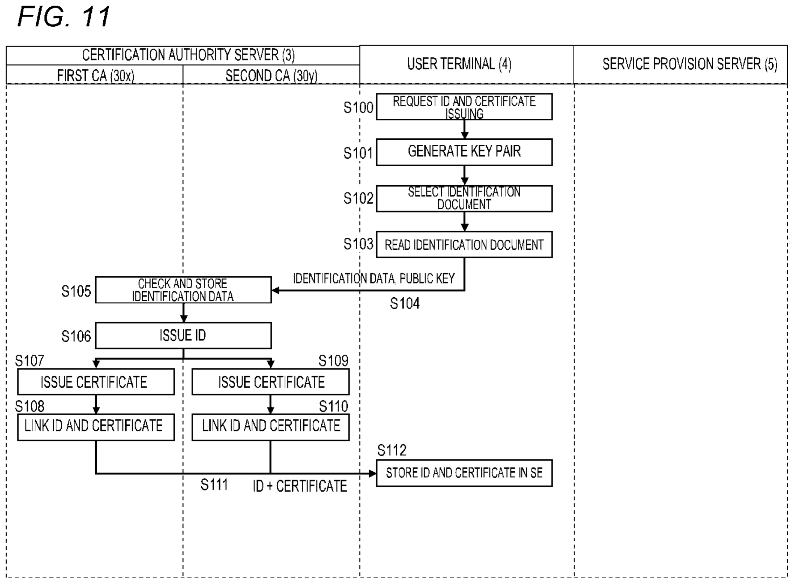

FIG. 11 shows an example of a processing sequence in the case where a single certification authority server 3 issues a digital ID and multiple electronic certificates. For example, in the case of the system configuration shown in FIG. 9, the processing sequence shown in FIG. 11 may be adopted. For convenience of illustration and description, an example of two certification authorities 30x and 30y is described below, but those skilled in the art will easily understand that similar processing can be extended to three or more certification authorities.

First, the user starts a dedicated application on the user terminal 4 and performs an operation to request the issuing of a digital ID and/or an electronic certificate (step S100). A key pair is generated by the dedicated application (step S101). The key pair is stored in a secure element (SE). Options for identification documents to be used for identity proofing (identity verification) are displayed on the screen, and the user selects the desired identification document (step S102). Identification documents that include an integrated IC chip compatible with eKYC can be used as identification documents, and in this example, the user can choose between a My Number card and an IC passport. Thereafter, when the identification document is placed on or in the card reader of the user terminal 4 according to the guidance on the screen, the card reader reads the identification data from the IC chip of the identification document (step S103). Also, as necessary, an image of the user's face may be captured, or biometric information may be obtained, for example. The user's identification data and public key are sent to the certification authority server 3 (step S104).

Note that the identification data and the public key may be sent to the certification authority server 3 at the same time (in one request), or may be sent in two stages (in separate requests), such as first sending the identification data and performing identity proofing by eKYC, and then sending the public key and performing certificate issuing.

Identification data is information used to prove the identity of the user, and includes Basic 4 information (name, address, date of birth, and gender), for example. In the case of eKYC using the My Number card, in addition to the Basic 4 information, an electronic certificate stored on the My Number card and the person's facial image may also be acquired as identification data. In the case of eKYC using an IC passport, in addition to the Basic 4 information, the DS certificate and the person's facial image stored in the IC passport may also be acquired as identification data. Furthermore, the identification data may include the serial number of the identification document, for example.

Upon receiving the identification data from the user terminal 4, the ID provider 20 of the certification authority server 3 confirms the legitimacy and the validity of the identification data (step S105). Specifically, in the case of eKYC using the My Number card, the ID provider 20 checks the validity of the electronic certificate of the My Number card through verification and inquiry to J-LIS. Additionally, in the case of eKYC using an IC passport, the ID provider 20 checks the validity of the DS certificate through verification and inquiry to ICAO PKD. Once the legitimacy and the validity of the identification data is confirmed, the ID provider 20 issues a digital ID to the user (step S106).

The ID provider 20 registers the user's identification data in the user database in association with the digital ID. Additionally, the ID provider 20 notifies the certification authorities 30x and 30y of the issued digital ID, and requests the generation of an electronic certificate. At this time, the user's public key and the user's identification data (only necessary information) are also passed to the certification authorities.

The first certification authority 30x is an accredited certification authority, and issues an electronic certificate for signing that has legal grounding (step S107), for example. In the case of an X.509-compliant electronic certificate developed by ITU-T, the electronic certificate includes a user public key, user information, certification authority digital signature, electronic certificate expiration date, and issuer information, for example. In the example in FIG. 6, the electronic certificate for signing EC1 includes only a name (in alphabet characters) as user information, and the electronic certificate for signing EC2 includes a name (in alphabet characters), a name (in kanji), an address, and a date of birth as user information. Furthermore, in addition to this information, the first certification authority 30x links the digital ID and the electronic certificate to each other by describing the digital ID in the electronic certificate (step S108). In this case, it is sufficient that the first certification authority 30x attaches an electronic signature to the data description that includes the user's public key, user information, and digital ID. This makes it possible to prevent falsification of the digital ID in the electronic certificate, thereby enabling ensuring the ability of the digital ID to guarantee the identity of the electronic certificate.

The second certification authority 30y is a general certification authority, and issues a general electronic certificate (step S109), for example. A general electronic certificate is the anonymous electronic certificate EC4 that does not include the user's personal information as shown in FIG. 6, for example. The second certification authority 30y links the digital ID and the electronic certificate to each other by describing the digital ID in the electronic certificate (step S110). In this case as well, it is sufficient that the electronic signature of the second certification authority 30y is attached to the data description including the digital ID.

The certification authority server 3 transmits a data set including the issued digital ID and the electronic certificates issued by the certification authorities 30x and 30y to the user terminal 4 (step S111). The dedicated application on the user terminal 4 stores the received digital ID and electronic certificates in the secure element (SE) (step S112). Through the above procedure, the user can receive a digital ID and electronic certificates through an online procedure performed using the user terminal 4.

Note that the digital ID is always the same among multiple electronic certificates, but the public key may be the same among multiple electronic certificates, or may be different for each electronic certificate. If the public key is different for each electronic certificate, multiple key pairs are generated in step S101, and multiple public keys for each certification authority are sent to the certification authority server 3 in step S104.

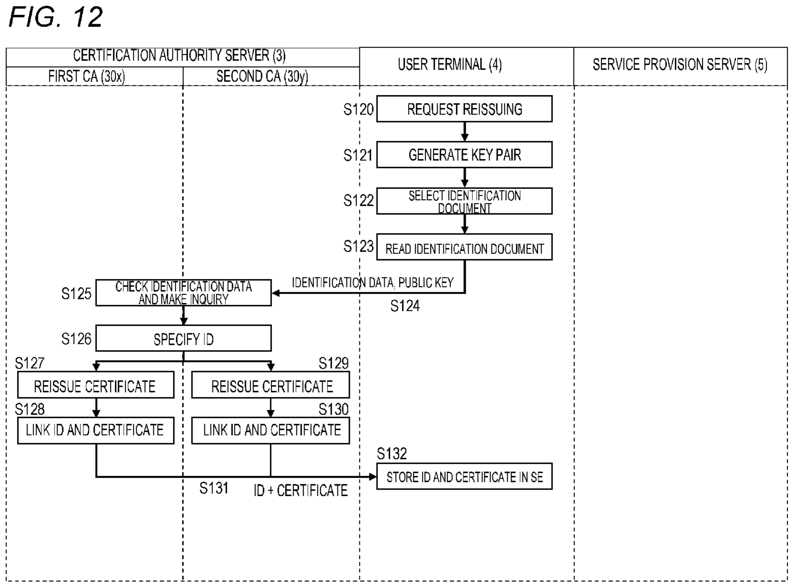

FIG. 12 shows an example of a processing sequence in the case of reissuing an electronic certificate. For example, if the user loses an electronic certificate or a key pair due to loss or malfunction of the user terminal 4, the user can request reissuing by following the procedure shown in FIG. 12.

First, the user starts the dedicated application on the user terminal 4 and performs an operation to request reissuing of a digital ID and/or electronic certificate (step S120). A new key pair is generated by the dedicated application and stored in the secure element (step S121). Options for identification documents to be used for identity proofing (identity verification) are displayed on the screen, and the user selects the desired identification document (step S122). Identification documents that include an integrated IC chip compatible with eKYC can be used as identification documents, and in this example, the user can choose between a My Number card and an IC passport. Thereafter, when the identification document is placed on or in the card reader of the user terminal 4 according to the guidance on the screen, the card reader reads the identification data from the IC chip of the identification document (step S123). Also, as necessary, an image of the user's face may be captured, or biometric information may be obtained, for example. The user's identification data and the public key are sent to the certification authority server 3 (step S124).

Upon receiving the identification data from the user terminal 4, the ID provider 20 of the certification authority server 3 confirms the legitimacy and the validity of the identification data, and then makes an inquiry regarding whether or not registration data regarding the same user exists in a user database (step S125). Whether or not the two users are the same is determined by evaluating consistency between the identification data.

If registration data regarding the same user exists, the ID provider 20 reads the digital ID of the user from the user database (step S126). The processing in the subsequent steps S127 to S132 is substantially the same as the processing in steps S107 to S112 in FIG. 11, and thus will not be described. If an electronic certificate issued to the user in the past by the certification authority server 3 is stored in the user database, and furthermore the electronic certificate can be used, the stored electronic certificate may be provided to the user terminal 4 instead of reissuing an electronic certificate. Note that if registration data regarding the same user does not exist in the user database, a new digital ID needs to be issued, and thus it is sufficient that the processing moves to step S106 in FIG. 11.

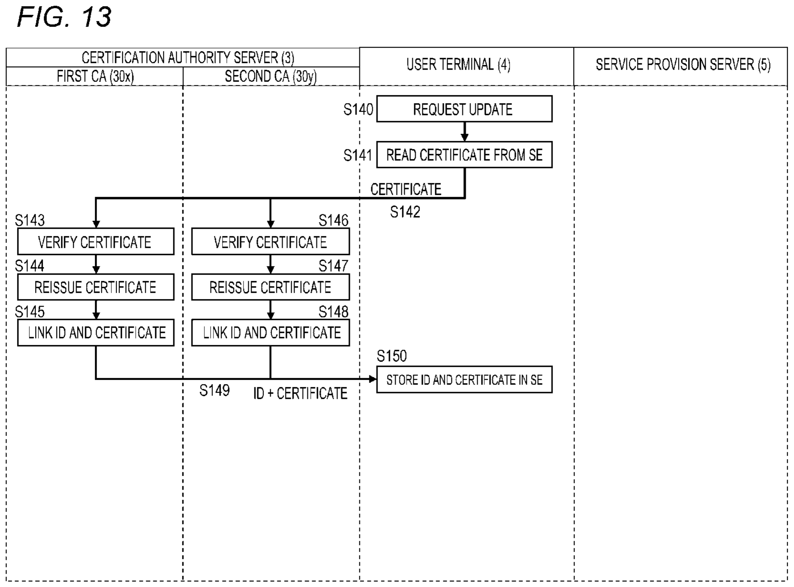

FIG. 13 shows an example of a processing sequence in the case of updating an electronic certificate. For example, if a user has an electronic certificate that has expired or is about to expire, the expiration date can be updated using the procedure shown in FIG. 13.

Using the dedicated application, the user selects an electronic certificate to be updated from among the electronic certificates stored in the user terminal 4, and performs an update request operation (step S140). Then, the electronic certificate to be updated is read from the secure area by the dedicated application (step S141), and sent to the certification authority server 3 along with an update request (step S142).

The certification authority server 3 hands over the electronic certificate to be updated, which was received from the user terminal 4, to the certification authority 30x or 30y that issued the electronic certificate. The certification authority 30x or 30y verifies the legitimacy of an electronic certificate by verifying the electronic signature attached to the electronic certificate to be updated (steps S143 and S146). If the legitimacy of the electronic certificate is confirmed (in other words, if it is confirmed that the electronic certificate was issued in the past by the certification authority 30x or 30y), the certification authority 30x or 30y reissues an electronic certificate and links it with the digital ID (steps S144 to S145, and S147 to S148). At this time, information described in the electronic certificate before the update may be used as is for the user's digital ID, user information, public key, and the like. This is because the legitimacy of this information including the digital ID is guaranteed by the digital signature attached to the old electronic certificate before the update.

The certification authority server 3 transmits the updated new electronic certificate to the user terminal 4 (step S149). The dedicated application on the user terminal 4 replaces the old electronic certificate stored in the secure element with the new electronic certificate (step S150). According to the above procedure, an electronic certificate linked to a digital ID can be updated with a simple operation. In particular, since identity proofing is not required, complexity and the burden on the user are reduced.

### (2) Example in Which Accredited Certification Authority Server Issues Digital ID

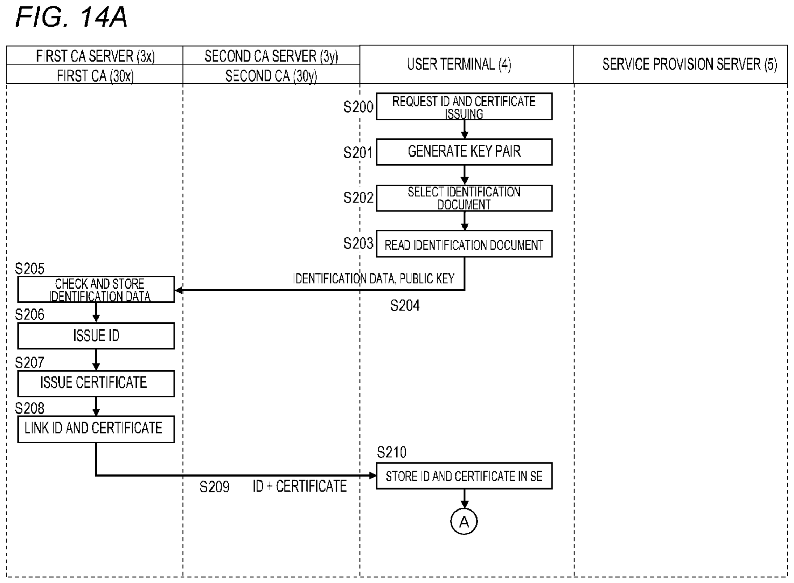

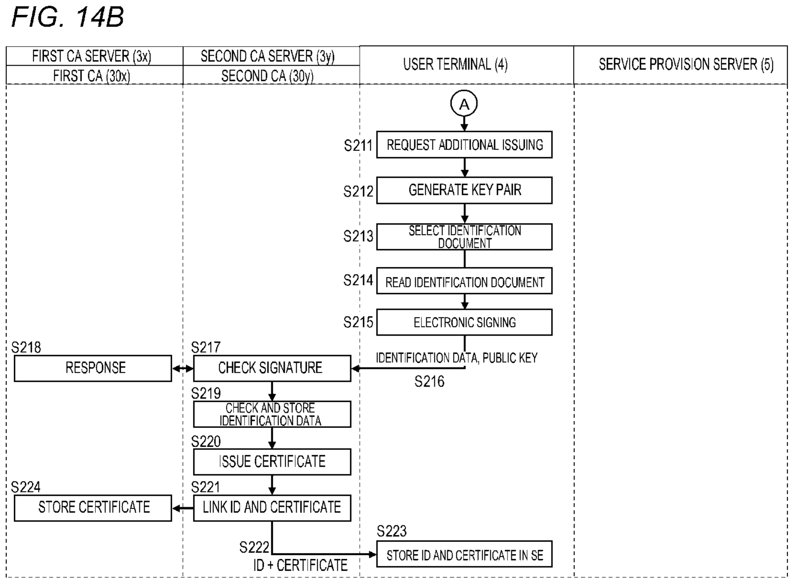

The processing sequence in FIGS. 14A and 14B is a procedure in which a digital ID and an electronic certificate for signing are issued in a first certification authority server 3x, and then the same digital ID is linked to an electronic certificate issued in another second certification authority server 3y. For example, in the case of the system configuration shown in FIG. 10, the processing sequences shown in FIGS. 14A and 14B may be adopted. For convenience of illustration and description, an example of two certification authority servers 3x and 3y is described below, but those skilled in the art will easily understand that similar processing can be extended to three or more certification authority servers.

The processing of steps S200 to S204 is substantially the same as the processing in steps S100 to S104 in FIG. 11, and thus will not be described.

Upon receiving identification data from the user terminal 4, the ID provider 20 of the first certification authority server 3x confirms the legitimacy and the validity of the identification data (step S205). The specific confirmation method may be the same as step S105 in FIG. 11. If the legitimacy and the validity of the identification data is confirmed, the ID provider 20 issues a digital ID to the user (step S206). The ID provider 20 registers the user's identification data in the user database in association with the digital ID.

Then, the certification authority 30x of the first certification authority server 3x issues an electronic certificate for signing that is linked to the digital ID (steps S207 and S208). The specific processing may be the same as steps S107 and S108 in FIG. 11. The first certification authority server 3x transmits a data set including the digital ID and the electronic certificate that were issued, to the user terminal 4 (step S209). The dedicated application of the user terminal 4 stores the received digital ID and electronic certificate in the secure element (step S210). Hereinafter, the electronic certificate issued by the first certification authority 30x will be referred to as the "first electronic certificate".

After receiving the digital ID and the first electronic certificate from the first certification authority 30x, the user can receive issuing of an electronic certificate linked to the same digital ID from the other certification authority 30y.

Specifically, the user starts the dedicated application on the user terminal 4 and performs an operation to request additional issuing of an electronic certificate (step S211). A new key pair is generated by the dedicated application and stored in the secure element (step S212). Options for identification documents to be used for identity proofing (identity verification) are displayed on the screen, and the user selects the desired identification document (step S213). In this case as well, a My Number card or an IC passport can be selected. Thereafter, when the identification document is placed on or in the card reader of the user terminal 4 according to the guidance on the screen, the card reader reads the identification data from the IC chip of the identification document (step S214). Also, as necessary, an image of the user's face may be captured, or biometric information may be obtained, for example.

The dedicated application electronically signs the identification data using the private key corresponding to the first electronic certificate (step S215), and sends the electronically signed identification data, the public key generated in step S212, and the first electronic certificate to the second certification authority server 3y (step S216).

Upon receiving a request for issuing of an electronic certificate from the user terminal 4, the second certification authority server 3y first verifies the digital signature (step S217). Specifically, the second certification authority server 3y inquires the first certification authority 30x about the legitimacy and the validity of the first electronic certificate. If the legitimacy and the validity of the first electronic certificate are confirmed (step S218), the second certification authority server 3y checks whether the electronic signature was issued by the user (using their private key) by verifying the electronically signed ciphertext using the public key included in the first electronic certificate, and checking for a match between the verification result and the original data. At this time, the second certification authority server 3y may acquire registration data regarding the user from the first certification authority server 3x, or check whether a user digital ID registered in the first certification authority server 3x matches the digital ID linked to the first electronic certificate.

Next, the second certification authority server 3y checks the legitimacy and the validity of the identification data (step S219). Note that since strict identity proofing is performed when a digital ID is issued in the first certification authority server 3x, it is sufficient to perform the minimum necessary identity proofing according to the assurance level of the certification authority at this timing (the processing of step S219 may be omitted if the user's personal information is not described in the electronic certificate issued by the second certification authority server 3y).

After that, the second certification authority server 3y issues a second electronic certificate linked to the user's digital ID (steps S220 and S221). The specific processing may be the same as steps S109 and S110 in FIG. 11. The digital ID information described in the first electronic certificate provided from the user terminal 4 may be used. Since the legitimacy of the first electronic certificate is ensured by the processing in step S217, it is also guaranteed that the digital ID described therein belongs to the user.

The second certification authority server 3y transmits a data set including the digital ID and the newly issued second electronic certificate to the user terminal 4 (step S222). The dedicated application of the user terminal 4 stores the digital ID and second electronic certificate that were received in the secure element (step S223). Also, the second certification authority server 3y transmits the second electronic certificate to the first certification authority server 3x (step S224). In the first certification authority server 3x, the first and second electronic certificates linked to the same digital ID are aggregated and managed in a user database. If aggregation and management of electronic certificates is not required, the processing of step S224 may be omitted.

Through the above procedure, the user can receive additional issuing of an electronic certificate linked to the digital ID from a desired certification authority at a desired time.

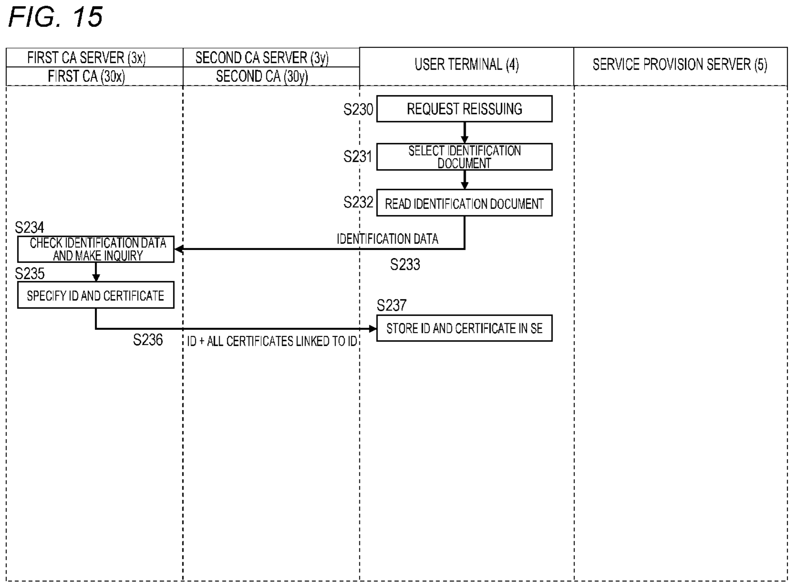

The processing sequence in FIG. 15 shows an example of a procedure for reissuing an electronic certificate. If the electronic certificate is lost but the key pair remains in the secure element of the user terminal 4, the electronic certificate can be reissued using the procedure shown in FIG. 15.

First, the user starts the dedicated application on the user terminal 4 and performs an operation to request reissuing of the electronic certificate (step S230). Options for identification documents to be used for identity proofing (identity verification) are displayed on the screen, and the user selects the desired identification document (step S231). In this case as well, a My Number card or an IC passport can be selected. Thereafter, when the identification document is placed on or in the card reader of the user terminal 4 according to the guidance on the screen, the card reader reads the identification data from the IC chip of the identification document (step S232). Also, as necessary, an image of the user's face may be captured, or biometric information may be obtained, for example. The user's identification data is sent to the first certification authority server 3x (step S233).

Upon receiving the identification data from the user terminal 4, the first certification authority server 3x checks the legitimacy and the validity of the identification data, and then makes an inquiry regarding whether or not registration data regarding the same user exists in the user database (step S234). Whether or not the two users are the same is determined by evaluating consistency between the identification data.

If registration data regarding the same user exists, the first certification authority server 3x reads a digital ID and an electronic certificate that correspond to the user from the user database (step S235), and sends the read information to the user terminal 4 (step S236). If the first certification authority server 3x aggregates and manages electronic certificates issued by other certification authorities, it is sufficient that all electronic certificates linked to the user's digital ID are sent to the user terminal 4. The dedicated application on the user terminal 4 stores the received digital ID and electronic certificates in the secure element (SE) (step S237).

Through the above procedure, multiple electronic certificates issued by different certification authorities can be reissued at the same time. However, if registration data regarding the same user does not exist in the user database, or if such registration data exists but a past electronic certificate is not available (e.g., if the user has lost the key pair), it is necessary to issue a new electronic certificate.

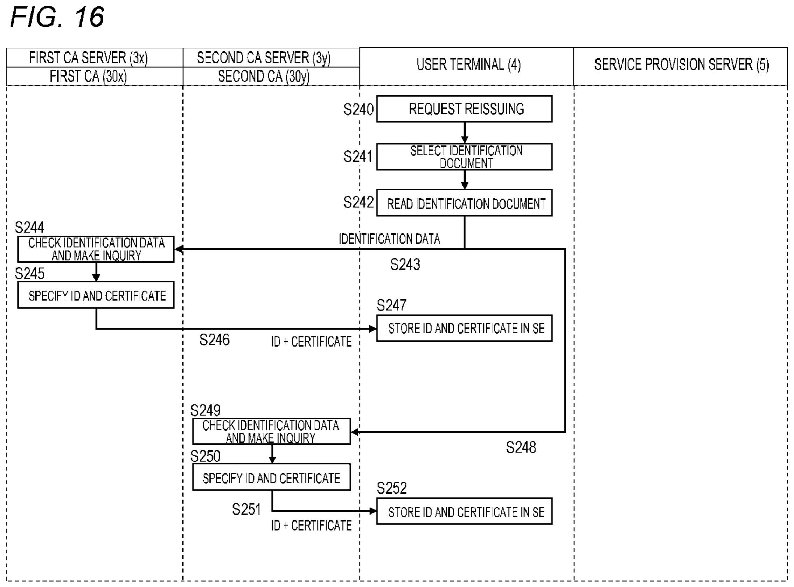

The processing sequence in FIG. 16 shows another example of a procedure for reissuing an electronic certificate. In the processing sequence shown in FIG. 16, the certification authority that issued an electronic certificate is individually requested to reissue the electronic certificate. If multiple electronic certificates linked to a digital ID are not managed centrally, the procedure shown in FIG. 16 may be performed.

When an electronic certificate reissue request operation is performed on the user terminal 4, an identification document is selected, and necessary identification data is read (steps S240 to S242). The procedure up to this point is the same as the processing sequence shown in FIG. 15. Thereafter, in the processing sequence shown in FIG. 16, identification data is sent from the user terminal 4 to the first certification authority server 3x and the second certification authority server 3y (steps S243 and S248).

Upon receiving the identification data from the user terminal 4, the first certification authority server 3x checks the legitimacy and the validity of the identification data, and then makes an inquiry regarding whether or not registration data regarding the same user exists in the user database (step S244). Whether or not the two users are the same is determined by evaluating consistency between the identification data. If registration data regarding the same user exists, the first certification authority server 3x reads the digital ID and the electronic certificate corresponding to the user from the user database (step S245), and sends the read information to the user terminal 4 (step S246). The dedicated application of the user terminal 4 stores the received digital ID and electronic certificate in the secure area in the secure element (step S247).

Similarly, upon receiving the identification data from the user terminal 4, the second certification authority server 3y also confirms the legitimacy and the validity of the identification data, and then makes an inquiry regarding whether or not registration data regarding the same user exists in a user database (step S249). Whether or not the two users are the same is determined by evaluating consistency between the identification data. If registration data regarding the same user exists, the second certification authority server 3y reads the digital ID and the electronic certificate corresponding to the user from the user database (step S250), and sends the read information to the user terminal 4 (step S251). The dedicated application of the user terminal 4 stores the received digital ID and electronic certificate in the secure area in the secure element (step S252).

Through the above-described procedure, the user terminal 4 can receive reissuing of an electronic certificate from the certification authority servers 3x and 3y.

### (3) Example in Which Digital ID and Electronic Certificate Are Issued by Different Servers

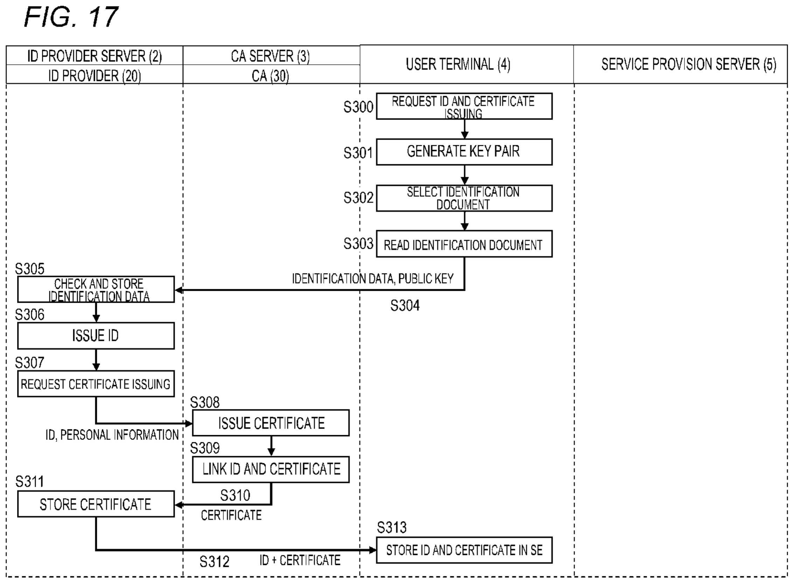

The processing sequence in FIG. 17 shows an example of a procedure in the case where a digital ID and an electronic certificate are issued by different servers. For example, in the case of the system configuration shown in FIG. 8, the processing sequence shown in FIG. 17 may be adopted.

The processing of steps S300 to S304 is the same as the processing of steps S100 to S104 in FIG. 11, and therefore will not be described.

Upon receiving identification data from the user terminal 4, the ID provider 20 of the ID provider server 2 checks the legitimacy and the validity of the identification data (step S305). The specific confirmation method may be the same as step S105 in FIG. 11. If the legitimacy and the validity of the identification data is confirmed, the ID provider 20 issues a digital ID to the user (step S306). The ID provider 20 registers the user's identification data in the user database in association with the digital ID. The ID provider 20 then transmits an electronic certificate issuing request along with the digital ID, personal information, and public key to the certification authority server 3 (step S307).

The certification authority server 3 issues an electronic certificate linked to the digital ID based on the issuing request from the ID provider server 2 (steps S308 and S309). The specific processing may be the same as steps S107 and S108 in FIG. 11. The certification authority server 3 transmits the issued electronic certificate to the ID provider server 2 (step S310).

The ID provider server 2 registers the electronic certificate received from the certification authority server 3 in the user database (step S311), and transmits a data set including the digital ID and the electronic certificate to the user terminal 4 (step S312). The dedicated application of the user terminal 4 stores the received digital ID and electronic certificate in the secure area in the secure element (step S313).

Through the above procedure, the user can receive issuing of a digital ID and an electronic certificate. If an additional electronic certificate is to be received from another certification authority, the same processing as in steps S211 to S223 in FIG. 14B may be executed for the other certification authority. Furthermore, the same procedure as the processing sequence in FIG. 15 or 16 can be adopted for reissuing the electronic certificate. Note that the ID provider server 2 plays the role of the first certification authority server 3x in FIGS. 14B, 15, and 16.

### (4) Linking of Digital ID to Existing Electronic Certificate

There are cases where, for example, a user holds an electronic certificate obtained before subscribing to the trust service of the electronic authentication system 1, or an electronic certificate issued by an organization unrelated to the electronic authentication system 1. If a digital ID is post-linked to such an existing electronic certificate, it is possible to add an identity to the existing electronic certificate and to enable centralized management using the digital ID.

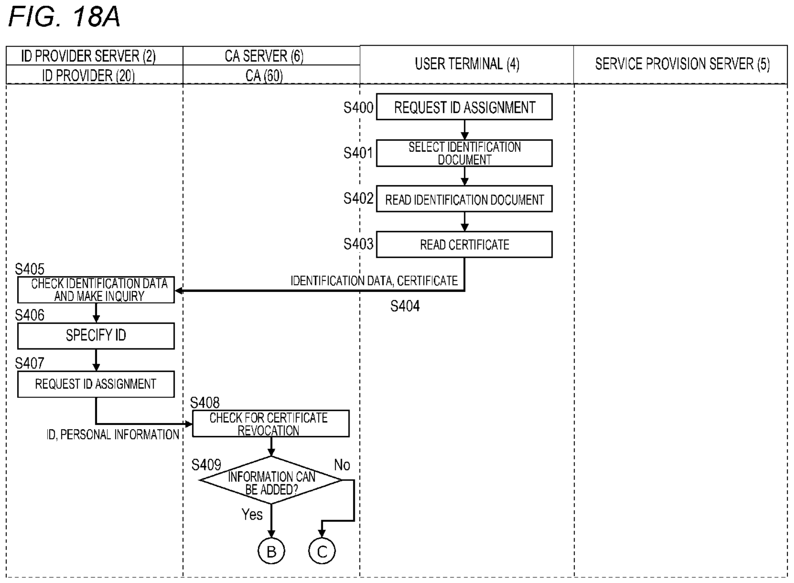

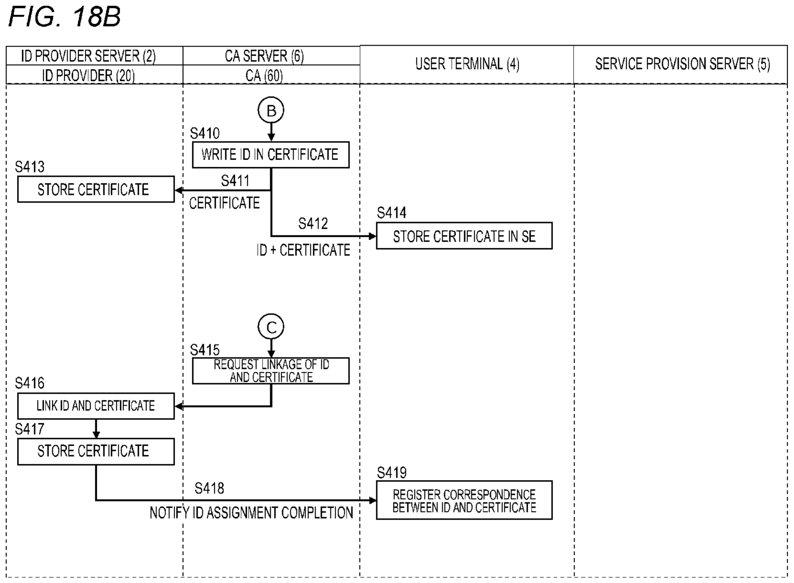

The processing sequences in FIGS. 18A and 18B show an example of a procedure for post-linking a digital ID to an existing electronic certificate. Note that it is presumed that the user has already received a digital ID from the ID provider 20, and that an electronic certificate (an electronic certificate not including a digital ID) issued by a certification authority 60 of a certification authority server 6 unrelated to the electronic authentication system 1 is stored in the user terminal 4.

First, the user starts the dedicated application on the user terminal 4 and performs an operation to request assignment of an ID to the electronic certificate (step S400). Options for identification documents to be used for identity proofing (identity verification) are displayed on the screen, and the user selects the desired identification document (step S401). In this case as well, a My Number card or an IC passport can be selected. Thereafter, when the identification document is placed on or in the card reader of the user terminal 4 according to the guidance on the screen, the card reader reads the identification data from the IC chip of the identification document (step S402). Also, as necessary, an image of the user's face may be captured, or biometric information may be obtained, for example. The dedicated application of the user terminal 4 reads the electronic certificate to which an ID is to be assigned from the memory (step S403), and transmits an ID assignment request together with the electronic certificate and identification data to the ID provider server 2 (step S404).

Upon receiving the identification data from the user terminal 4, the ID provider 20 of the ID provider server 2 confirms the legitimacy and the validity of the identification data, and then makes an inquiry regarding whether or not registration data regarding the same user exists in a user database (step S405). Whether or not the two users are the same is determined by evaluating consistency between the identification data. If registration data regarding the same user exists, the ID provider 20 reads the digital ID of the user from the user database (step S406). The ID provider 20 transmits an ID assignment request to the certification authority 60 along with the digital ID, the user personal information, and the electronic certificate (step S407). The certification authority 60 is the certification authority that issued the electronic certificate to which the ID is to be assigned.

After checking whether or not the received electronic certificate is valid (step S408), the certification authority 60 performs processing for linking the digital ID to the electronic certificate. If the electronic certificate to which the ID is to be assigned has specifications that allow additional information to be written (Yes in step S409), the certification authority 60 writes the digital ID in the electronic certificate (step S410), and transmits the updated electronic certificate to the ID provider server 2 and the user terminal 4 (steps S411 and S412). The ID provider server 2 stores the updated electronic certificate in association with the user's digital ID and other electronic certificates (step S413). Also, the dedicated application of the user terminal 4 stores the updated electronic certificate (electronic certificate including the digital ID) in the secure element (step S414).

If the electronic certificate to which the ID is to be assigned has specifications that do not allow additional information to be written (No in step S409), the certification authority 60 transmits a request for linking the digital ID and the electronic certificate to each other to the ID provider server 2 (step S415). The ID provider server 2 stores the electronic certificate in association with the user's digital ID and other electronic certificates (steps S416 and S417), and then transmits an ID assignment completion notification to the user terminal 4 (step S418). Upon receiving the ID assignment completion notification, the dedicated application of the user terminal 4 registers the correspondence between the digital ID and the electronic certificate in a management database in the application (step S419). Such a mechanism makes it possible to link a digital ID and an electronic certificate to each other even if the electronic certificate has specifications that do not allow a digital ID to be written.

### <Examples of Usage of Electronic Certificate>

Next, the following describes a procedure in which electronic certificates issued by the electronic authentication system 1 are used for digital services, and an example of how electronic certificates with different assurance levels are used differently. To simplify this description, it is presumed here that the user has two types of electronic certificates ECx and ECy, as follows:
- first electronic certificate ECx issued by first certification authority 30x (personal information included, high assurance level)
- second electronic certificate ECy issued by second certification authority 30y (personal information not included, low assurance level)

### (1) User Registration for Digital Service Requiring Identity Proofing

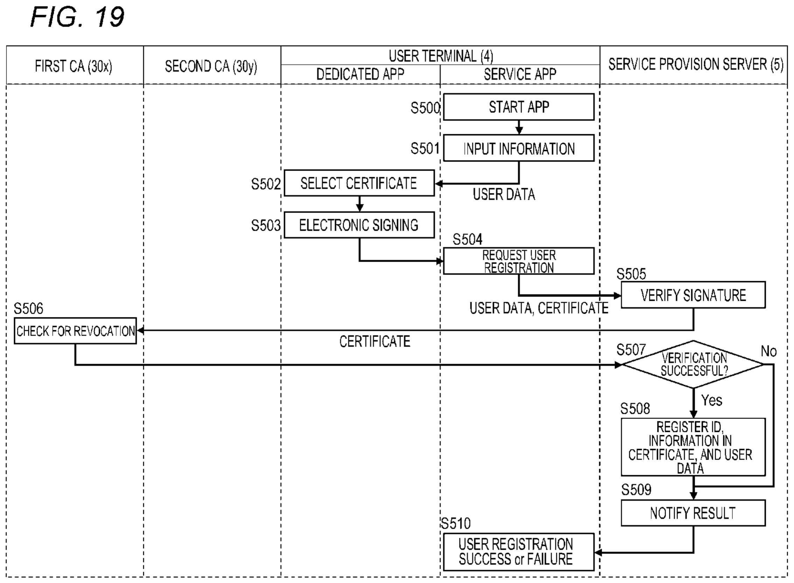

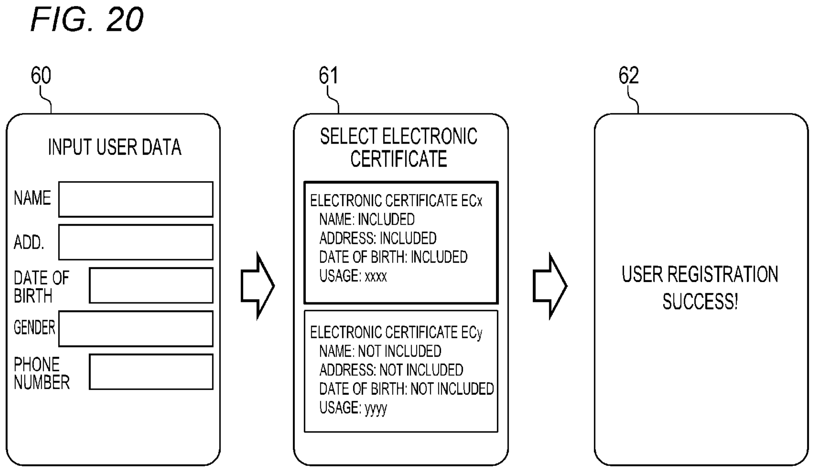

A procedure for user registration for a digital service that requires identity proofing will be described below with reference to FIGS. 19 and 20. FIG. 19 shows an example of a processing sequence for user registration, and FIG. 20 shows an example of a screen displayed on the user terminal 4. Examples of digital services that require identity proofing include administrative procedures, internet banking, and online medical treatment.

First, the user operates the user terminal 4 and starts a service application for using the digital service (step S500). When started for the first time, a user registration screen 60 as shown in FIG. 20 is displayed, and the user is requested to input user data such as name, address, date of birth, gender, and telephone number (step S501). Once the user has entered the requested user data, the user data is passed to the dedicated application.

Next, the dedicated application displays an electronic certificate selection screen 61 (step S502). A list of electronic certificates stored in the secure element of the user terminal 4 is displayed on the selection screen 61. Although not shown, when using data or functions of the secure element, the user may be required to enter a PIN code or a password (the same applies below). Two options are displayed on the selection screen 61 shown in FIG. 20, namely the electronic certificate ECx and the electronic certificate ECy, and the user can select the electronic certificate that is to be used for user registration for the digital service on the screen 61. It is preferable that the selection screen 61 displays information such as whether or not personal information is included, the application (assurance level), and the like as a description for each of the electronic certificates ECx and ECy. Here, the electronic certificate ECx that matches the assurance level required by the digital service is selected. Note that the service application or the dedicated application may assist the user in selecting an electronic certificate by, for example, automatically selecting an electronic certificate that satisfies the assurance level required by the digital service, or excluding electronic certificates that do not satisfy the assurance level required by the digital service from the options.

Subsequently, the dedicated application reads the selected electronic certificate ECx from the secure element, and electronically signs the user data using the private key (step S503). At this time, it is preferable that the dedicated application confirms the user's intention regarding the data that is to be electronically signed, and the procedure to be performed using the electronic signature. In this case, it is preferable to confirm the user's intention regarding electronically signing user data that includes personal information in order to submit a user registration application. Then, the service application transmits the user data with the electronic signature and the electronic certificate ECx to the service provision server 5 (step S504).

The service provision server 5 verifies the electronic signature received from the user terminal 4 (step S505). Specifically, the service provision server 5 verifies that the data was electronically signed using the user's private key by verifying the electronically signed ciphertext using the user's public key included in the electronic certificate ECx and checking whether the verification result matches the user data. Also, the service provision server 5 makes an inquiry to the certification authority 30x, which is the issuer of the electronic certificate ECx, regarding the legitimacy and the validity of the electronic certificate ECx. The certification authority 30x checks for revocation of the electronic certificate ECx and returns the check result to the service provision server 5 (step S506).

If the electronic signature and the electronic certificate ECx were successfully verified (Yes in step S507), the service provision server 5 registers, in a database, the "digital ID" and the "user information" extracted from the electronic certificate ECx, and the "user data" received from the user terminal 4 (step S508). When the user registration is complete, the service provision server 5 notifies the user terminal 4 that the user registration was successful (steps S509 and S510). FIG. 20 shows an example of a notification screen 62 displayed on the user terminal 4 in the case where user registration was successful. Note that if the electronic signature verification fails or the electronic certificate ECx has expired, user registration is not performed, and the service provision server 5 notifies the user terminal 4 that user registration failed (steps S509 and S510).

Note that since the electronic certificate ECx used here includes personal information, there are cases where the "user information" of the electronic certificate ECx includes items the same as items in the "user data" entered by the user (e.g. name and address). In such a case, in the verification in step S505, it may be checked whether the descriptions in "user information" and "user data" match (i.e., whether or not the information entered on the user terminal 4 is free from errors or falsehoods). If an item that does not match is detected, user registration may be interrupted and the user terminal 4 may be notified that there is an error in the input data.

As described above, when using a digital service that requires a high assurance level, highly reliable identity proofing can be performed using the electronic certificate ECx that includes personal information. At this time, there is no need to again provide identity verification documents or identification documents, and processing can be completed simply by operating the application on the user terminal 4, and thus the burden on the user (complexity) is small. In other words, by using the trust service provided by the electronic authentication system 1, it is possible to both ensure a high assurance level and improve user convenience.

### (2) User Registration for Digital Service That Can Be Used Anonymously

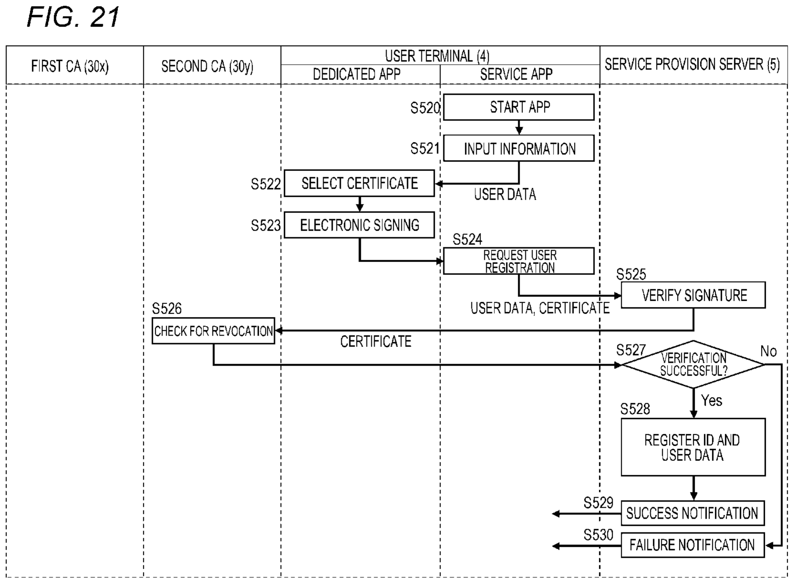

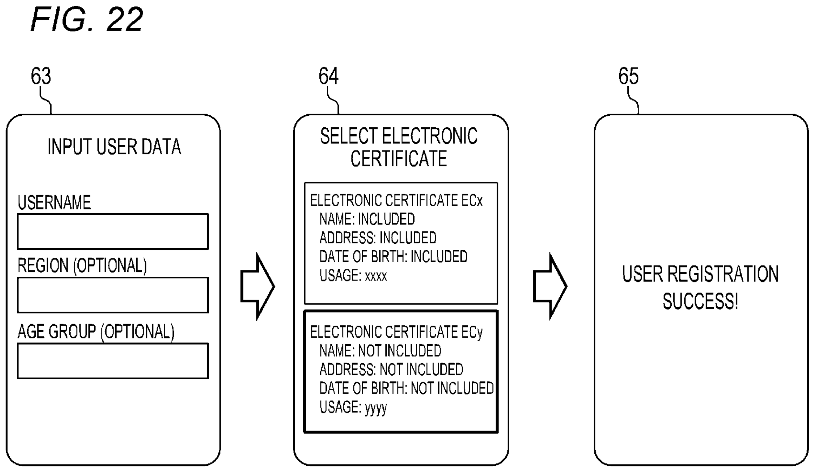

A procedure for user registration for a digital service that can be used anonymously will be described below with reference to FIGS. 21 and 22. FIG. 21 shows an example of a processing sequence for user registration, and FIG. 22 shows an example of a screen displayed on the user terminal 4. Examples of a digital service that can be used anonymously include an SNS, store search, and membership applications.

First, the user operates the user terminal 4 and starts a service application for using the digital service (step S520). When started for the first time, a user registration screen 63 as shown in FIG. 22 is displayed, and the user is requested to input user data such as username, region of residence, and age group (step S521). There is no need to enter the user's real name as the username, and it is possible to use a nickname, an email address, or the like. The area of residence and the age group are information for understanding the general attributes of the user, and are optional input items. Once the user has finished entering their user data, the user data is passed to the dedicated application.

Next, the dedicated application displays the electronic certificate selection screen 64 (step S522). A list of electronic certificates stored in the secure element of the user terminal 4 is displayed on the selection screen 64. Two options are displayed on the selection screen 64 shown in FIG. 22, namely the electronic certificate ECx and the electronic certificate ECy, and the user can select the electronic certificate that is to be used for user registration for the digital service on the screen 64. Here, the electronic certificate ECy that matches the assurance level required by the digital service is selected. Of course, the user is free to select the electronic certificate ECx that has a higher assurance level than that required by the digital service, but since there is no need to unnecessarily disclose personal information, it is more appropriate to select the electronic certificate ECy with the assurance level that is necessary and sufficient for the digital service requirement. Note that the service application or the dedicated application may assist the user in selecting an electronic certificate by automatically selecting or recommending the electronic certificate that best matches the digital service requirement.

Subsequently, the dedicated application reads the selected electronic certificate ECy from the secure element, and electronically signs the user data using the private key (step S523). Then, the service application transmits the user data with the electronic signature and the electronic certificate ECy to the service provision server 5 (step S524).

The service provision server 5 verifies the electronic signature received from the user terminal 4 (step S525). Specifically, the service provision server 5 verifies that the data was electronically signed using the user's private key by verifying the electronically signed ciphertext using the user's public key included in the electronic certificate ECy and checking whether the verification result matches the user data. Also, the service provision server 5 makes an inquiry to the certification authority 30y, which issued the electronic certificate ECy, regarding the legitimacy and the validity of the electronic certificate ECy. The certification authority 30y checks for revocation of the electronic certificate ECy and returns the check result to the service provision server 5 (step S526).

If the electronic signature and the electronic certificate ECy were successfully verified (Yes in step S527), the service provision server 5 registers, in a database, the "digital ID" extracted from the electronic certificate ECy, and the "user data" received from the user terminal 4 (step S528). When the user registration is complete, the service provision server 5 notifies the user terminal 4 that the user registration was successful (step S529). FIG. 22 shows an example of the notification screen 65 in the case where user registration was successful. Note that if the electronic signature verification fails or the electronic certificate ECy has expired, user registration is not performed, and the service provision server 5 notifies the user terminal 4 that user registration failed (step S530).

As described above, when using a digital service that can be used anonymously, user registration can be performed using the electronic certificate ECy that does not include personal information. At this time, although identity proofing is not performed using personal information such as a real name, the user's identity is guaranteed by the digital ID linked to the electronic certificate ECy. In other words, by using the trust service provided by the electronic authentication system 1, the user's identity can be guaranteed without disclosing the user's personal information, which is beneficial for both the user and the service provider.

### (3) Login to Digital Service (User Authentication)

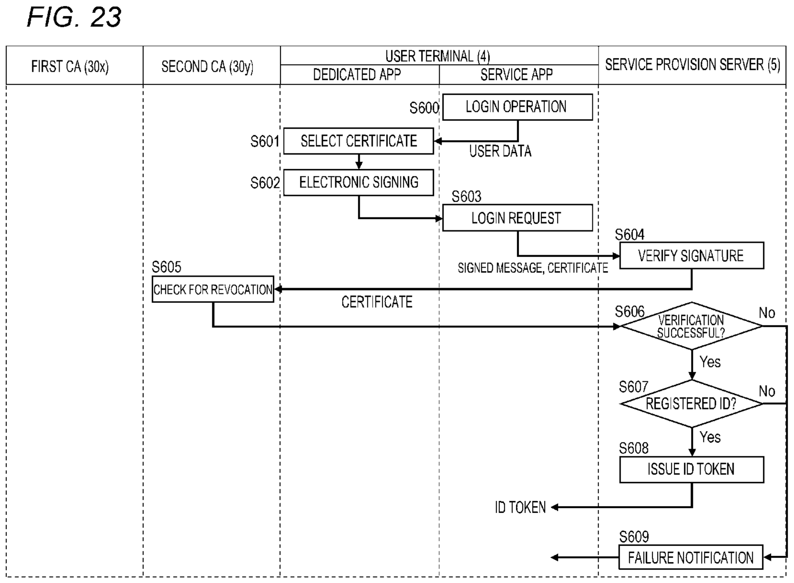

A procedure for user authentication when logging into a digital service will be described below with reference to FIG. 23. FIG. 23 shows an example of a processing sequence for user authentication.

First, by operating the user terminal 4, the user starts a service application for using a digital service, and performs a login operation (step S600). Then, the dedicated application selects an electronic certificate to be used for user authentication from among the electronic certificates stored in the secure element (step S601). Technically, an electronic certificate issued by any certification authority can be used for user authentication. Therefore, unless there are special restrictions or requirements, it is preferable to use the electronic certificate ECy, which does not include personal information, for user authentication. However, if a request from a digital service requires the use of an electronic certificate with a high assurance level for user authentication, for example, the electronic certificate ECx, which includes personal information, is used for user authentication. The dedicated application may automatically determine which electronic certificate is to be selected based on the assurance level required by the digital service. In the following, it is presumed that the electronic certificate ECy has been selected.

The dedicated application reads the selected electronic certificate ECy from the secure element, and uses the private key to electronically sign the login message (step S602). Then, the service application transmits the electronically signed login message and the electronic certificate ECy for authentication to the service provision server 5 (step S603).

The service provision server 5 verifies the login message with the electronic signature received from the user terminal 4 (step S604). Specifically, the service provision server 5 verifies that the data was electronically signed using the user's private key by verifying the electronically signed ciphertext using the user's public key included in the electronic certificate ECy and checking whether the verification result matches the login message. Also, the service provision server 5 makes an inquiry to the certification authority 30y, which issued the electronic certificate ECy, regarding the legitimacy and the validity of the electronic certificate ECy. The certification authority 30y checks for revocation of the electronic certificate ECy and returns the check result to the service provision server 5 (step S605).

If the electronic signature and the electronic certificate ECy were successfully verified (Yes in step S606), the service provision server 5 checks whether or not the digital ID included in the electronic certificate ECy is registered in a user database, that is to say whether or not the user is a registered user (step S607). If the digital ID has been registered (Yes in step S607), an ID token is issued to the user terminal 4 by the service provision server 5 (step S608). Thereafter, the user terminal 4 uses the ID token to communicate with the digital service provided by the service provision server 5.

If the electronic signature verification fails, if the electronic certificate ECy has expired, or if the digital ID has not been registered, the service provision server 5 notifies the user terminal 4 that the login failed (step S609).

As described above, by using an electronic certificate for user authentication at the time of login, it not necessary to input a login ID, a password, or the like, and thus the login processing can be simplified. Also, by performing user authentication using a combination of an electronic certificate and a digital ID, it is possible to reliably prevent unauthorized logins, such as impersonation. Also, the user's identity can be guaranteed using the digital ID, regardless of whether the user uses their real name or an anonymous username.

### (4) Linking of Digital ID to Existing Login ID

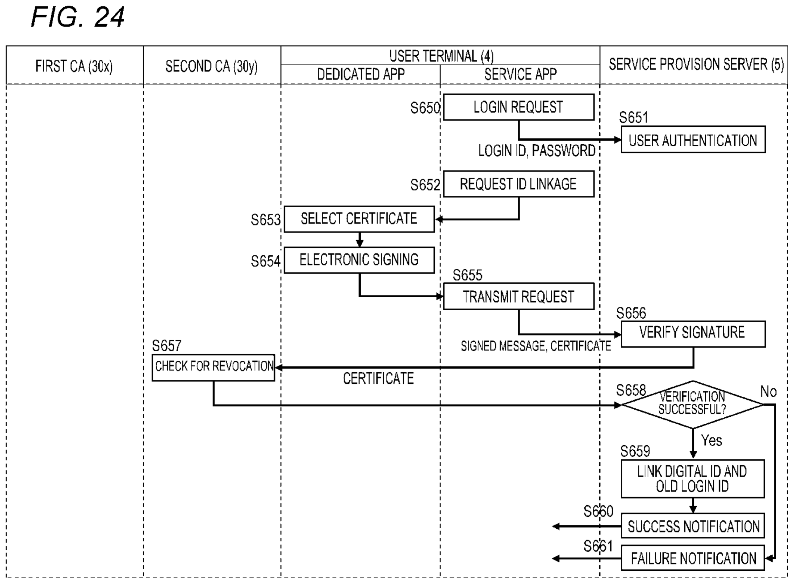

The follow envisions a situation where a user of a digital service switches from authentication using a login ID and a password to user authentication using an electronic certificate of this trust service. When making such a switch, it is necessary for the existing login ID used for user authentication in the digital service to be linked (integrated) with the user's digital ID. FIG. 24 shows an example of processing for linking a digital ID to an existing login ID.

First, by operating the user terminal 4, the user starts a service application for using a digital service, and logs in to the digital service using an existing login ID and password (steps S650 and S651). This is because after user authentication is performed using the existing login ID, an electronic certificate and a digital ID are registered during the authentication session. When a digital ID linking request is made in the service application (step S652), the dedicated application selects an electronic certificate to be used for user authentication from among the electronic certificates stored in the secure element (step S653). Technically, an electronic certificate issued by any certification authority can be used for user authentication. Therefore, unless there are special restrictions or requirements, it is preferable to use the electronic certificate ECy, which does not include personal information, for user authentication. However, if a request from a digital service requires the use of an electronic certificate with a high assurance level for user authentication, for example, the electronic certificate ECx, which includes personal information, is used for user authentication. The dedicated application may automatically determine which electronic certificate is to be selected based on the assurance level required by the digital service. In the following, it is presumed that the electronic certificate ECy has been selected.

The dedicated application reads the selected electronic certificate ECy from the secure element and uses the private key to digitally sign the message (step S654). Then, the service application transmits the electronically signed message and the electronic certificate ECy for authentication to the service provision server 5 (step S655).

The service provision server 5 verifies the electronically signed message received from the user terminal 4 (step S656). Specifically, the service provision server 5 verifies that the data was electronically signed using the user's private key by verifying the electronically signed ciphertext using the user's public key included in the electronic certificate ECy and checking whether the verification result matches the message. Also, the service provision server 5 makes an inquiry to the certification authority 30y, which issued the electronic certificate ECy, regarding the legitimacy and the validity of the electronic certificate ECy. The certification authority 30y checks for revocation of the electronic certificate ECy and returns the check result to the service provision server 5 (step S657).

If the electronic signature and the electronic certificate ECy were successfully verified (Yes in step S658), the service provision server 5 links the digital ID included in the electronic certificate ECy to the user data and the login ID of the user registered in the user database (step S659). If the digital ID was successfully linked, the service provision server 5 transmits a message indicating that the linking was successful to the user terminal 4 (step S660). If the electronic signature verification fails, if the electronic certificate ECy has expired, or if the linking of the digital ID fails, the service provision server 5 notifies the user terminal 4 that the linking failed (step S661).

Through the processing described above, a digital service that uses conventional authentication with a login ID and password can be incorporated into the framework of the trust service related to the electronic authentication system 1.

### <Inter-service Cooperation Across Electronic Certificates>

In a situation where a user uses two services A and B operated by different providers, even if the user desires for their user information stored in the service B to be used in the service A, it is difficult in reality to link data between different providers. This is because there is no mechanism by which the providers can check and reliably determine whether a user using the service A and a user using the service B are actually the same person.

To address this, with the trust service provided by the electronic authentication system 1 related to this proposal, the identity and consistency of a user can be confirmed using the digital ID, and therefore data can be exchanged between multiple services that the user is using with an electronic certificate, with a safe and simple procedure.

If this kind of secure inter-service cooperation can be realized, it can be expected to be applicable in a variety of situations. Examples include the provision of electronic medical records from hospital B to hospital A, the provision of data from dispensing pharmacy B to medical institution A, the provision of a transaction history from bank B to fintech service A, the provision of purchase data from online shopping site B to an advertising service A, and the provision of reservation information from travel reservation site B to rental car reservation site A, and these are simply a few examples.

The following describes (1) inter-service cooperation via a data linking platform and (2) inter-service cooperation, as specific methods for realizing inter-service cooperation.

### (1) Inter-service Cooperation via Data Linking Platform

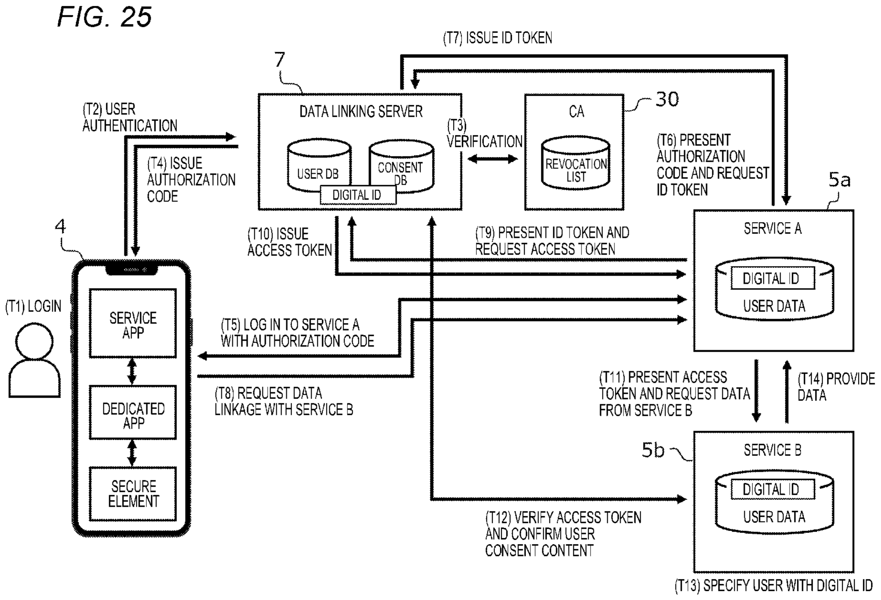

The electronic authentication system 1 shown in FIG. 25 includes a data linking server 7. The data linking server 7 serves as a data linking platform that centrally manages user authentication and data linkage authorization. Frameworks such as OIDC (OpenID Connect) and OAuth may be used as authentication and authorization methods, for example.

In FIG. 25, reference sign 5a indicates a service provision server that provides the service A. When a user uses the service A, by performing user registration and user authentication using an electronic certificate linked to a digital ID, a service provision server 5a stores and manages user data in association with a digital ID, which is a personal identifier for the user. Similarly, in a service provision server 5b that provides the service B, user data is stored and managed in association with the user's digital ID. Even if the user uses the services A and B anonymously (and with different usernames), it is possible to determine whether data belongs to the same user by checking that the digital IDs match.

The following describes a procedure by which user data stored in the service B is provided to the service A. Note that it is assumed that the user has agreed in advance to "provision of user data stored in service B to service A", and consent information to that effect is registered in a consent database of the data linking server 7.

First, the user logs into the data linking server 7 from the user terminal 4 and requests authorization (step T1). User authentication is performed using an electronic signature provided using the user's private key, and an electronic certificate for the corresponding public key (step T2). At this time, the user's facial image, biometric information, identification document (My Number card or IC passport), or the like may also be used.

The data linking server 7 verifies the validity and the legitimacy of the user's electronic signature and electronic certificate by making an inquiry to the certification authority 30 (step T3). If the verification is successful (i.e., if it is confirmed that the authentic user is logged in), the data linking server 7 issues an authorization code (step T4). The authorization code indicates that the user has authorized inter-service cooperation via the data linking platform. The authorization code is used when the service provision server acquires an ID token for accessing the data linking platform.

Upon receiving the authorization code, the user terminal 4 automatically transitions to the login page for the service A, and logs in to the service A with the authorization code (step T5). The service provision server 5a then presents the authorization code to the data linking server 7 and requests an **ID** token (step T6). The data linking server 7 verifies the validity and the legitimacy of the authorization code, and if the verification is successful, issues an **ID** token to the service provision server 5a (step T7). The **ID** token is a temporary permit for the service provision server 5a to access the data linking platform.

Thereafter, the user uses the user terminal 4 to request the service A to link data with the service B (step T8). The service provision server 5a then presents the ID token to the data linking server 7 and requests an access token (step T9). The data linking server 7 verifies the validity and the legitimacy of the ID token, and if the verification is successful, issues an access token to the service provision server 5a (step T10). The access token is a temporary permit for the service provision server 5a to access another service provision server. A limited access token with a specified cooperation destination service may be used, or a general-purpose access token with no specified cooperation destination may be used.

Upon acquiring the access token, the service provision server 5a presents the access token and requests data from the service provision server 5b (step T11). The service provision server 5b makes an inquiry to the data linking server 7, verifies the validity and the legitimacy of the access token, and checks whether or not the user has consented to the provision of user data stored in the service B to another service, and also the scope of information that may be provided (e.g., whether or not personal information can be disclosed), for example. The user's digital ID is notified to the service provision server 5b along with the verification result and the confirmation result. The authorization codes, the ID tokens, and the access tokens issued by the data linking server 7 are managed by the data linking server 7 in association with corresponding user digital IDs, and a user and their digital ID can be specified based on the access token presented by the service provision server 5b.

The service provision server 5b identifies the user of the service B using the digital ID (step T13), and provides the user's data to the service provision server 5a (step T14).

According to the procedure described above, data can be linked between the services A and B operated by different providers. At this time, the user terminal 4, the data linking server 7, the service A, and the service B each verify the identity and consistency of the user using the digital ID, thus making it possible to ensure a high degree of safety and the necessary assurance level, while also realizing data linkage with a simple procedure.

### (2) Direct Inter-service Cooperation

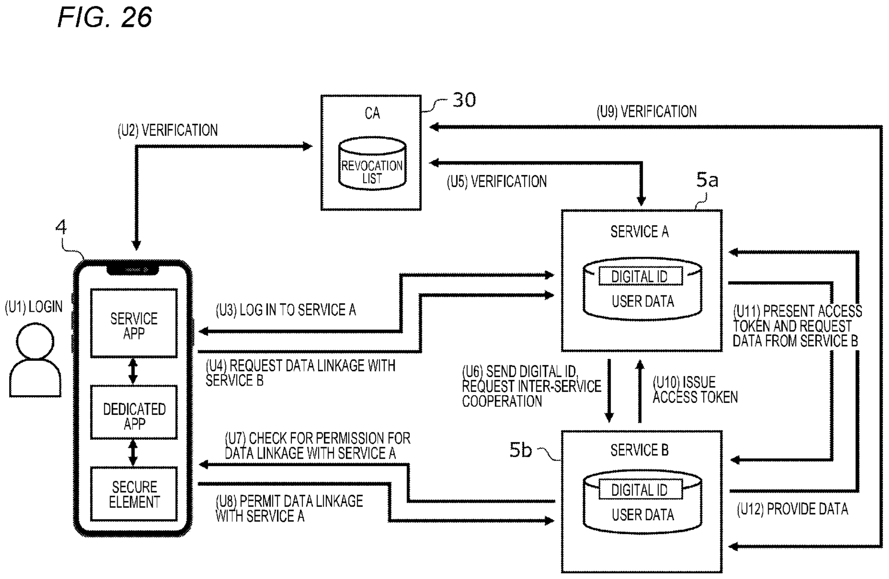

FIG. 26 shows an example in which a server providing the service A and a server providing the service B directly perform data linking without using a data linking platform. A procedure by which user data regarding the user stored in the service B is provided to the service A will be described below with reference to FIG. 26.

First, the user logs in to the service application on the user terminal 4 (step U1). An electronic certificate is used for user authentication. At this time, the user's facial image, biometric information, identification document (My Number card or IC passport), or the like may also be used in combination. The service application verifies the validity and the legitimacy of the user's electronic certificate by making an inquiry to the certification authority 30 (step U2). If the verification is successful, the service application on the user terminal 4 automatically transitions to the login page for the service A and logs in to the service A (step U3).

Thereafter, the user uses the user terminal 4 to request the service A to link data with the service B (step U4). This data linkage request is accompanied by the user's electronic signature and electronic certificate. The service provision server 5a makes an inquiry to the certification authority 30 and verifies the validity and the legitimacy of the electronic signature and the electronic certificate (step U5). If the verification is successful, the service provision server 5a transmits a request for inter-service cooperation to the service provision server 5b along with the digital ID linked to the electronic certificate (step U6).

Upon receiving the request for inter-service cooperation, the service provision server 5b makes an inquiry to the user terminal 4 regarding whether or not data linking with the service A is permitted (step U7). At this time, the user terminal 4 can be specified by the digital ID notified in step U6. If the user gives consent on the confirmation screen displayed on user terminal 4, the service application automatically transitions to the login page for the service B, and after logging in to the service B, an indication of permission for data linkage with the service A is notified to the service provision server 5b (step U8). The service provision server 5b attaches the user's electronic signature to the service application login request. The service provision server 5b makes an inquiry to the certification authority 30 and verifies the validity and the legitimacy of the electronic signature and the electronic certificate (step U9). If the verification is successful, the service provision server 5b issues an access token to the service provision server 5a (step U10).

Upon acquiring the access token, the service provision server 5a presents the access token and requests data from the service provision server 5b (step U11). The service provision server 5b provides the requested data to the service provision server 5a (step U12). At this time, the user is specified using the digital ID notified in step U6.

According to the procedure described above, data can be linked between the services A and B operated by different providers. At this time, the user terminal 4, the service A, and the service B each confirm the user's identity and consistency using the digital ID, thus making it possible to ensure a high degree of safety and the necessary assurance level, while also realizing data linkage with a simple procedure.

### <Other Matter>

Although eKYC using a passport was proposed, there are currently multiple eKYC services using a passport, and thus it is conceivable to use any of such services instead of this proposal. Existing eKYC services using passports are divided into two types, namely those that read the passport's IC chip with an NFC-enabled terminal and transmit information, and those that read the facial image provided on the passport before transmitting information. Examples of services of the former type include Nets Passport Reader, LibJelD, and Jumio. Nets has a high standard of safety called eIDAS High, and is a service that is intended for use in the EU. LibJelD allows access to public IC cards that are widely used in Japan, and is a service that is intended for use in Japan. Jumio provides ID verification solutions and has a track record of implementation in over 200 countries.

Examples of eKYC services that read the facial image provided on passports include LIQUID eKYC and TRUSTDOCK. Compared with the type of service that reads IC chip information, this type of service that reads the facial image provided on identity proofing documents has an advantage of not requiring an NFC-compatible terminal to perform eKYC. However, on the other hand, there is a risk that identity proofing may not be carried out correctly due to deterioration of the passport itself, and the risk of forgery of the facial image provided on the passport.

According to the present embodiment described above, it is possible to reconsider the fact that digital IDs and electronic certificates have been treated independently, and realize a trust service model that can comprehensively handle the two together. By using the digital ID issued by this model, a user will be able to use multiple electronic certificates differently depending on the service. Furthermore, since the components of this model are highly customizable, it is possible to not only accommodate the assurance level appropriate for a certain service, but also provide services to countries and regions other than Japan. By incorporating the person's attribute information, qualification information, and characteristics as a digital ID, it is possible to not only perform authentication, but also give authorization according to the person's attributes.

In the embodiment described above, a My Number card and an IC passport are used as an official identification document used for identity proofing, but the present invention is not limited to these examples, and other official identification documents may be used. For example, it is also possible to use Pakistan's Computerized National Identity Card (CNIC), Indonesia's Kartu Tanda Penduduk Elektronik (e-KTP), India's Aadhaar card, Philippine's ePhillD card, or the like.

## Claims

1. An electronic authentication system comprising:
an ID provider configured to issue a digital ID to a user after performing identity proofing on the user;
a first certification authority configured to issue a first electronic certificate to the user; and
a second certification authority configured to issue a second electronic certificate to the user,
wherein the first certification authority and the second certification authority link the same digital ID, issued to the user by the **ID** provider, to the first electronic certificate and the second electronic certificate.

2. The electronic authentication system according to claim 1, wherein
the digital ID is an identifier in a format in which the user cannot be identified by the identifier alone.

3. The electronic authentication system according to claim 1 or 2, wherein
a first public key and the digital ID of the user are described in the first electronic certificate, and a data description including the first public key and the digital ID is electronically signed by the first certification authority, and
a second public key and the digital ID of the user are described in the second electronic certificate, and a data description including the second public key and the digital ID is electronically signed by the second certification authority.

4. The electronic authentication system according to any of claims 1 to 3, wherein
the first electronic certificate is an electronic certificate having a higher assurance level than the second electronic certificate.

5. The electronic authentication system according to claim 4, wherein
the first electronic certificate includes a description of personal information of the user, and
the second electronic certificate does not include a description of personal information of the user.

6. The electronic authentication system according to any of claims 1 to 5, wherein
the **ID** provider is configured to perform identity proofing on the user by eKYC using an official identification document.

7. An electronic authentication method comprising the steps of:
performing identity proofing on a user by eKYC using an official identification document;
issuing a digital ID to the user after the identity proofing;
issuing, to the user, a first electronic certificate to which the digital ID is linked;
issuing, to the user, a second electronic certificate to which the same digital ID as the digital ID of the first electronic certificate is linked; and
storing the digital ID, the first electronic certificate, and the second electronic certificate in a memory of a user terminal in possession of the user.

8. The electronic authentication method according to claim 7, further comprising the steps of:
allowing the user to select an electronic certificate to be used for user registration for a service provided by a service provision server, from among a plurality of electronic certificates including the first electronic certificate and the second electronic certificate;
electronically signing user data necessary for the user registration using a private key corresponding to the selected electronic certificate;
transmitting the selected electronic certificate and the electronically signed user data to the service provision server; and
verifying the selected electronic certificate and the electronic signature in the service provision server, and, in a case where the verification is successful, registering the user data and the digital ID, extracted from the selected electronic certificate, in a database in the service provision server.

9. The electronic authentication method according to claim 7, further comprising the steps of:
performing login to a second service, provided by a second service provision server, using user authentication performed with a login ID and a password;
allowing the user to select an electronic certificate to be used in the second service, from among a plurality of electronic certificates including the first electronic certificate and the second electronic certificate;
transmitting the selected electronic certificate to the second service provision server; and
linking the digital ID, extracted from the selected electronic certificate, to the login ID in the second service provision server.

10. The electronic authentication method according to claim 7, further comprising the steps of:
performing login to a first service provided by a first service provision server, from the user terminal;
requesting, while being logged in to the first service, the first service provision server to perform data linking with a second service provided by a second service provision server, from the user terminal;
acquiring, with the first service provision server, an access token from a data linking server;
presenting, with the first service provision server, the access token and requesting data from the second service provision server;
inquiring, with the second service provision server, of the data linking server about validity of the access token;
acquiring, with the second service provision server, the digital ID of the user, who has requested the data linking, from the data linking server; and
specifying, with the second service provision server, a user of the second service on the basis of the digital ID, and providing data regarding the user of the second service to the first service provision server.

11. The electronic authentication method according to claim 7, further comprising the steps of:
performing login to a first service provided by a first service provision server, from the user terminal;
transmitting, while being logged in to the first service, an electronic certificate and a data linking request for data linking with a second service provided by a second service provision server, from the user terminal to the first service provision server;
transmitting, with the first service provision server, to the second service provision server the digital ID linked to the received electronic certificate, together with an inter-service cooperation request; and
specifying, with the second service provision server, a user of the second service on the basis of the digital ID, and providing data regarding the user of the second service to the first service provision server.
